# EUROPEAN PATENT APPLICATION

(11) **EP 3 889 761 A1**
(43) Date of publication of application: **06.10.2021**
(21) Application number: 19903357.2
(22) Date of filing: 30.11.2019
(51) Int. Cl.: G06F 3/14, G06F 3/147, G06F 3/0481, G06F 3/0488

(54) **MESSAGE PROCESSING METHOD, RELATED DEVICE, AND SYSTEM**

(30) Priority: 29.12.2018 CN 201811640377
(71) Applicant: HUAWEI TECHNOLOGIES CO., LTD., Shenzhen, Guangdong 518129 (CN)
(72) Inventor: XIA, Shaohua, Shenzhen, Guangdong 518129 (CN)
(74) Representative: Isarpatent
(86) International application number: PCT/CN2019/122255
(87) International publication number: WO 2020/134872

(57) **Abstract**

A message processing method is provided, and includes: first sending, by a terminal, first data to an external display device after the terminal establishes a connection to the external display device, to instruct the external device to display a first interface in full screen mode; sending, by the terminal, a first instruction to the external display device after the terminal receives a new message of a first application, to instruct the external display device to display first notification information; and when the terminal receives a first input operation performed by a user on the first notification information, displaying, by the terminal, a third interface, and sending second data to the external display device, to instruct the external display device to divide a display area of the external display device into a first display area and a second display area; and displaying, in the first display area, a fourth interface obtained after the first interface is scaled down proportionally, and displaying, in the second display area, a fifth interface that has a same interface element as the third interface. In this way, the external display device can simultaneously display a plurality of independent display interfaces in split-screen mode, so that the user can simultaneously operate the plurality of display interfaces.

## Description

This application claims priority to Chinese Patent Application No. 201811640377.8, filed with the China National Intellectual Property Administration on December 29, 2018 and entitled "MESSAGE PROCESSING METHOD, RELATED APPARATUS, AND SYSTEM", which is incorporated herein by reference in its entirety.

### TECHNICAL FIELD

This application relates to the field of mobile communications technologies, and in particular, to a message processing method, a related apparatus, and a system.

### BACKGROUND

A terminal such as a personal computer (personal computer, PC) is one of important means for implementing mobile office. Specifically, the terminal such as a mobile phone may project content displayed on a screen of the mobile phone onto a large-screen display such as a PC by using a Wi-Fi display (Wi-Fi-Display) function or a Microsoft continuum (continuum) function, so that the mobile phone can be used as the PC after being connected to an external display device.

After the mobile phone establishes a connection to the large-screen display, the mobile phone has two displays. One of the two displays is a touchscreen of the mobile phone, and the other is the external display device connected to the mobile phone. The mobile phone may control the two displays to synchronously display a same display interface, or may control the two displays to respectively run two independent display interfaces.

When the mobile phone controls the two displays to respectively run the two independent display interfaces, for example, when the external display device plays a video or present a slideshow in full screen mode, if a user needs to view a new message such as an SMS message on the external display device after the mobile phone receives the new message, the user needs to exit full-screen playing of the video or full-screen presentation of the slideshow before the user can view the SMS message or a WeChat message and perform a further operation on the message. Consequently, the full-screen playing of the video or the slideshow is interrupted.

### SUMMARY

This application provides a message processing method, a related apparatus, and a system. When performing displaying on a plurality of screens, a terminal can simultaneously display a plurality of independent display interfaces in a split-screen display manner by using an external display device, so that a user can simultaneously operate the plurality of display interfaces.

According to a first aspect, this application provides a message processing method, including: A terminal first sends first data to an external display device after the terminal establishes a connection to the external display device. Then, the external display device displays a first interface in full screen mode based on the received first data. A second interface is displayed on a touchscreen of the terminal, and the first interface is different from the second interface. The terminal sends a first instruction to the external display device when the terminal receives a new message of a first application. The external display device displays first notification information after receiving the first instruction. Subsequently, when the terminal receives a first input operation performed by a user on the first notification information, the terminal displays a third interface through the touchscreen, and sends second data to the external display device. The third interface is an interface of the first application. Then, after receiving the second data, the external display device divides a display area of the external display device into a first display area and a second display area; and displays a fourth interface in the first display area, and displays a fifth interface in the second display area. The fourth interface is an interface obtained after the first interface is scaled down proportionally, and the fourth interface and the first interface have a same interface element; and an interface element in the fifth interface is the same as an interface element in the third interface.

In this way, when the terminal displays the first interface in full screen mode by using the external display device, if the terminal receives the new message of the first application, the terminal can display, in split-screen mode by using the external display device based on a requirement of the user, the interface obtained after the first interface is scaled down and the interface of the first application, so that the user can simultaneously operate a plurality of display interfaces on the external display device, and the user can view the new message of the first application.

In an implementation, after the external display device displays the fourth interface in the first display area, and displays the fifth interface in the second display area, the method further includes: The terminal first sends a second instruction to the external display device when the terminal receives a new message of a second application. Then, the external display device displays second notification information after receiving the second instruction. The terminal receives a second input operation performed by the user on the second notification information. The terminal sends third data to the external display device in response to the second input operation. After receiving the third data, the external display device displays the fourth interface in the first display area, and displays a sixth interface in the second display area. The sixth interface is an interface of the second application. In this way, after the external display device displays the two interfaces in split-screen mode, when the new message of the second application arrives, the terminal may display, based on a requirement of the user, the interface of the second application in a display area in which the interface of the first application is originally displayed on the external display device, so that the user can reply to new messages of a plurality of applications in a timely manner.

In an implementation, after the external display device displays the fourth interface in the first display area, and displays the fifth interface in the second display area, the method further includes: The terminal first sends a second instruction to the external display device when the terminal receives a new message of a second application. Then, the external display device displays second notification information after receiving the second instruction. The terminal receives a second input operation performed by the user on the second notification information. The terminal sends fourth data to the external display device in response to the second input operation. After receiving the fourth data, the external display device divides a display area of the external display device into a third display area, a fourth display area, and a fifth display area; and displays a seventh interface in the third display area, displays an eighth interface in the fourth display area, and displays a ninth interface in the fifth display area. The seventh interface and the fourth interface have a same interface element, the eighth interface is an interface of the first application, and the ninth interface is an interface of the second application. In this way, after the external display device displays the two interfaces in split-screen mode, when the new message of the second application arrives, the terminal can display, in split-screen mode by using the external display device based on a requirement of the user, the interface obtained after the first interface is scaled down, the interface of the first application, and the interface of the second application, so that the user can reply to new messages of a plurality of applications in a timely manner.

In an implementation, after the external display device displays the first notification message, the method further includes: When the terminal does not receive, within a first time threshold, the first input operation performed on the first notification message, the terminal sends a third instruction to the external display device. After receiving the third instruction, the external display device hides the first notification message, and displays a first prompt used to prompt the user to view the new message of the first application on the terminal. In this way, when the user does not expect to view the first notification message, the terminal hides the first notification message, to reduce blocking of the first interface displayed on the external display device. This improves user experience.

In an implementation, a touch sensor is disposed on the external display device. That the terminal receives the first input operation performed by the user on the notification message specifically includes: The terminal receives, by using the touch sensor of the external display device, a first touch operation performed by the user on the notification message. In this way, when the external display device is a screen with the touch sensor, the terminal can receive the touch operation performed by the user on the external display device, to enable split-screen display on the external display device, so that the user can quickly view the new message of the first application.

In an implementation, a mouse is connected to the terminal. That the terminal receives the first input operation performed by the user on the notification message specifically includes: The terminal receives, by using the mouse, a first click operation performed by the user on the first notification message. In this way, the terminal can receive, by using the mouse, the click operation performed by the user on the first notification message, to enable split-screen display on the external display device, so that the user can quickly view the new message of the first application.

In an implementation, a mouse is connected to the terminal. That the terminal receives the first input operation performed by the user on the notification message specifically includes: The terminal receives, by using the mouse, a first slide operation that the user operates a mouse pointer displayed on the external display device to slide in a first specified area on the external display device. A sliding distance of the first slide operation in the first specified area is greater than a first distance threshold, or a sliding time of the first slide operation in the first specified area is greater than a second time threshold. In this way, the terminal can receive, by using the mouse, the slide operation that the user controls the mouse pointer to slide on the external display device, to enable split-screen display on the external display device, so that the user can quickly view the new message of the first application.

In an implementation, a keyboard is connected to the terminal. That the terminal receives the first input operation performed by the user on the notification message specifically includes: The terminal receives, by using the keyboard, a first press operation performed by the user on one or more specified keys on the keyboard. In this way, the terminal can receive, by using the keyboard, the press operation performed by the user on the specified key, to enable split-screen display on the external display device, so that the user can quickly view the new message of the first application.

In an implementation, the method further includes: The terminal receives a third input operation of the user. The terminal sends fifth data to the external display device in response to the third input operation. The external display device displays the first interface in full screen mode after receiving the fifth data. In this way, after the user views the new message of the first application, the terminal can resume, based on a requirement of the user, displaying the first interface in full screen mode by using the external display device. This improves user experience.

In an implementation, the touch sensor is disposed on the external display device. That the terminal receives a third input operation of the user specifically includes: The terminal receives a second touch operation of the user by using the touch sensor of the external display device.

Alternatively, the mouse is connected to the terminal. That the terminal receives a third input operation of the user specifically includes: The terminal receives, by using the mouse, a second slide operation that the user operates the mouse pointer displayed on the external display device to slide in a second specified area on the external display device. A sliding distance of the second slide operation in the second specified area is greater than a second distance threshold, or a sliding time of the second slide operation in the second specified area is greater than the second time threshold.

Alternatively, the keyboard is connected to the terminal. That the terminal receives a third input operation of the user specifically includes: The terminal receives, by using the keyboard, a second press operation performed by the user on one or more specified keys on the keyboard.

In this way, when the external display device is a screen with the touch sensor, the terminal can receive the touch operation performed by the user on the external display device, to enable split-screen display on the external display device; or receive the slide operation that the user controls the mouse pointer to slide on the external display device, to enable split-screen display on the external display device; or receive, by using the keyboard, the press operation performed by the user on the specified key, to enable split-screen display on the external display device, so that the user can quickly view the new message of the first application.

In an implementation, the first interface includes a video play interface, a slideshow presentation interface, or a picture browsing interface. Alternatively, the second interface includes a home screen, and the home screen includes an icon of the first application.

According to a second aspect, this application provides a system, including a terminal and an external display device. The terminal is connected to the external display device. The terminal is configured to send first data to the external display device. The external display device is configured to display a first interface in full screen mode based on the received first data. A second interface is displayed on a touchscreen of the terminal, and the first interface is different from the second interface. The terminal is further configured to send a first instruction to the external display device when receiving a new message of a first application. The external display device is further configured to display first notification information after receiving the first instruction. The terminal is further configured to: when the terminal receives a first input operation performed by a user on the first notification information, display a third interface through the touchscreen, and send second data to the external display device. The third interface is an interface of the first application. The external display device is further configured to: after receiving the second data, divide a display area of the external display device into a first display area and a second display area; and display a fourth interface in the first display area, and display a fifth interface in the second display area. The fourth interface is an interface obtained after the first interface is scaled down proportionally, and the fourth interface and the first interface have a same interface element; and an interface element in the fifth interface is the same as an interface element in the third interface.

In this way, when the terminal displays the first interface in full screen mode by using the external display device, if the terminal receives the new message of the first application, the terminal can display, in split-screen mode by using the external display device based on a requirement of the user, the interface obtained after the first interface is scaled down and the interface of the first application, so that the user can simultaneously operate a plurality of display interfaces on the external display device, and the user can view the new message of the first application.

In an implementation, the terminal is further configured to send a second instruction to the external display device when receiving a new message of a second application. The external display device is further configured to display a second notification message after receiving the second instruction. The terminal is further configured to receive a second input operation performed by the user on the second notification message. The terminal is further configured to send third data to the external display device in response to the second input operation. The external display device is further configured to: after receiving the third data, display the fourth interface in the first display area, and display a sixth interface in the second display area. The sixth interface is an interface of the second application. In this way, after the external display device displays the two interfaces in split-screen mode, when the new message of the second application arrives, the terminal may display, based on a requirement of the user, the interface of the second application in a display area in which the interface of the first application is originally displayed on the external display device, so that the user can reply to new messages of a plurality of applications in a timely manner.

In an implementation, the terminal is further configured to send, by the terminal, a second instruction to the external display device when receiving a new message of a second application. The external display device is further configured to display a second notification message after receiving the second instruction. The terminal is further configured to receive a second input operation performed by the user on the second notification message. The terminal is further configured to send fourth data to the external display device in response to the second input operation. The external display device is further configured to: after receiving the fourth data, divide a display area of the external display device into a third display area, a fourth display area, and a fifth display area; and display a seventh interface in the third display area, display an eighth interface in the fourth display area, and display a ninth interface in the fifth display area. The seventh interface and the fourth interface have a same interface element, the eighth interface is an interface of the first application, and the ninth interface is an interface of the second application. In this way, after the external display device displays the two interfaces in split-screen mode, when the new message of the second application arrives, the terminal can display, in split-screen mode by using the external display device based on a requirement of the user, the interface obtained after the first interface is scaled down, the interface of the first application, and the interface of the second application, so that the user can reply to new messages of a plurality of applications in a timely manner.

In an implementation, the terminal is further configured to: when the terminal does not receive, within a first time threshold, the first input operation performed on the first notification message, send, by the terminal, a third instruction to the external display device. The external display device is further configured to: after receiving the third instruction, hide the first notification message, and display a first prompt used to prompt the user to view the new message of the first application on the terminal. In this way, when the user does not expect to view the first notification message, the terminal hides the first notification message, to reduce blocking of the first interface displayed on the external display device. This improves user experience.

In an implementation, a touch sensor is disposed on the external display device. That the terminal is further configured to receive the first input operation performed by the user on the notification message specifically includes: The terminal is further configured to receive, by using the touch sensor of the external display device, a first touch operation performed by the user on the notification message. In this way, when the external display device is a screen with the touch sensor, the terminal can receive the touch operation performed by the user on the external display device, to enable split-screen display on the external display device, so that the user can quickly view the new message of the first application.

In an implementation, the system further includes a keyboard, and the keyboard is connected to the terminal. That the terminal is further configured to receive the first input operation performed by the user on the notification message specifically includes: The terminal is further configured to receive, by using the mouse, a first click operation performed by the user on the first notification message. In this way, the terminal can receive, by using the mouse, the click operation performed by the user on the first notification message, to enable split-screen display on the external display device, so that the user can quickly view the new message of the first application.

In an implementation, the system further includes a mouse, and the mouse is connected to the terminal. That the terminal is further configured to receive the first input operation performed by the user on the notification message specifically includes: The terminal is further configured to receive, by using the mouse, a first slide operation that the user operates a mouse pointer displayed on the external display device to slide in a first specified area on the external display device. A sliding distance of the first slide operation in the first specified area is greater than a first distance threshold, or a sliding time of the first slide operation in the first specified area is greater than a second time threshold. In this way, the terminal can receive, by using the mouse, the slide operation that the user controls the mouse pointer to slide on the external display device, to enable split-screen display on the external display device, so that the user can quickly view the new message of the first application.

In an implementation, the system further includes a keyboard, and the keyboard is connected to the terminal. That the terminal is further configured to receive the first input operation performed by the user on the notification message specifically includes: The terminal is further configured to receive, by using the keyboard, a first press operation performed by the user on one or more specified keys on the keyboard. In this way, the terminal can receive, by using the keyboard, the press operation performed by the user on the specified key, to enable split-screen display on the external display device, so that the user can quickly view the new message of the first application.

In an implementation, the terminal is further configured to receive a third input operation of the user. The terminal is further configured to send fifth data to the external display device in response to the third input operation. The external display device is further configured to display the first interface in full screen mode after receiving the fifth data. In this way, after the user views the new message of the first application, the terminal can resume, based on a requirement of the user, displaying the first interface in full screen mode by using the external display device. This improves user experience.

In an implementation, the touch sensor is disposed on the external display device. That the terminal is further configured to receive a third input operation of the user specifically includes: The terminal receives a second touch operation of the user by using the touch sensor of the external display device.

Alternatively, the system includes the mouse connected to the terminal. That the terminal is further configured to receive a third input operation of the user specifically includes: The terminal receives, by using the mouse, a second slide operation that the user operates the mouse pointer displayed on the external display device to slide in a second specified area on the external display device. A sliding distance of the second slide operation in the second specified area is greater than a second distance threshold, or a sliding time of the second slide operation in the second specified area is greater than the second time threshold.

Alternatively, the system includes the keyboard connected to the terminal. That the terminal is further configured to receive a third input operation of the user specifically includes: The terminal receives, by using the keyboard, a second press operation performed by the user on one or more specified keys on the keyboard.

In this way, when the external display device is a screen with the touch sensor, the terminal can receive the touch operation performed by the user on the external display device, to enable split-screen display on the external display device; or receive the slide operation that the user controls the mouse pointer to slide on the external display device, to enable split-screen display on the external display device; or receive, by using the keyboard, the press operation performed by the user on the specified key, to enable split-screen display on the external display device, so that the user can quickly view the new message of the first application.

In an implementation, the first interface includes a video play interface, a slideshow presentation interface, or a picture browsing interface. Alternatively, the second interface includes a home screen, and the home screen includes an icon of the first application.

According to a third aspect, this application provides a terminal, including a memory, a touchscreen, a communications interface, one or more processors, and one or more programs. The one or more programs are stored in the memory. The communications interface is configured to communicate with an external display device and an external input device. When the processor runs the one or more programs, the terminal is enabled to implement the message processing method according to any one of the first aspect or the possible implementations of the first aspect.

According to a fourth aspect, this application provides a computer storage medium, including a computer instruction. When the computer instruction is run on a terminal, the terminal is enabled to implement the message processing method according to any one of the first aspect or the possible implementations of the first aspect.

According to a fifth aspect, an embodiment of this application provides a computer program product. When the computer program product runs on a computer, the computer is enabled to perform the message processing method according to any one of the first aspect or the possible implementations of the first aspect.

### BRIEF DESCRIPTION OF DRAWINGS

FIG. 1 is a schematic diagram of an application scenario of a message processing method according to an embodiment of this application;
FIG. 2A-1 and FIG. 2A-2 and FIG. 2B-1 and FIG. 2B-2 are schematic diagrams of a group of interfaces according to an embodiment of this application;
FIG. 3 is a schematic structural diagram of a terminal according to an embodiment of this application;
FIG. 4 is a schematic diagram of a software architecture according to an embodiment of this application;
FIG. 5A and FIG. 5B are a schematic diagram of an interface according to an embodiment of this application;
FIG. 6A and FIG. 6B are a schematic diagram of another interface according to an embodiment of this application;
FIG. 7A and FIG. 7B are a schematic diagram of another interface according to an embodiment of this application;
FIG. 8A-1 and FIG. 8A-2 to FIG. 8C-1 and FIG. 8C-2 are schematic diagrams of a group of interfaces according to an embodiment of this application;
FIG. 9A-1 and FIG. 9A-2 to FIG. 9C-1 and FIG. 9C-2 are schematic diagrams of a group of interfaces according to an embodiment of this application;
FIG. 10A-1 and FIG. 10A-2 and FIG. 10B-1 and FIG. 10B-2 are schematic diagrams of a group of interfaces according to an embodiment of this application;
FIG. 11A-1 and FIG. 11A-2 and FIG. 11B-1 and FIG. 11B-2 are schematic diagrams of a group of interfaces according to an embodiment of this application;

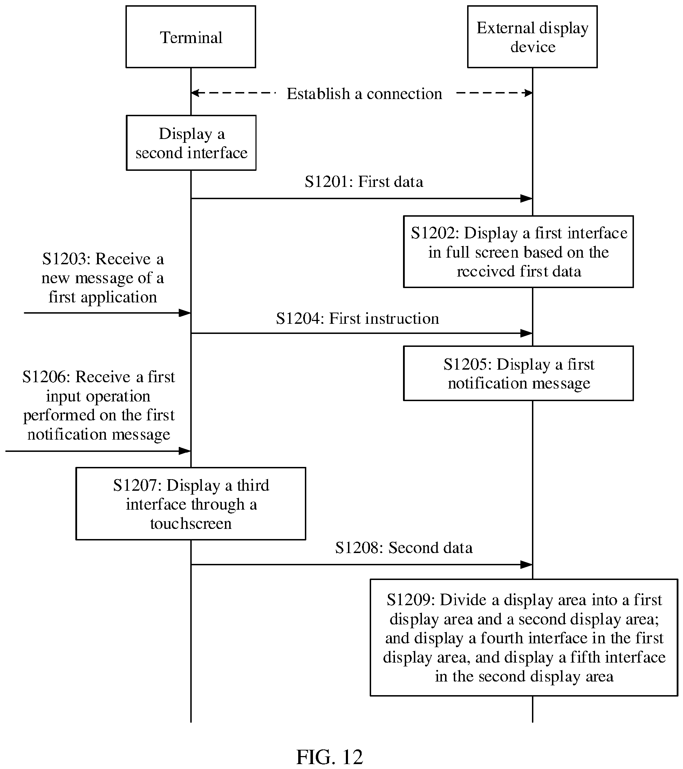

FIG. 12 is a schematic flowchart of a message processing method according to an embodiment of this application; and

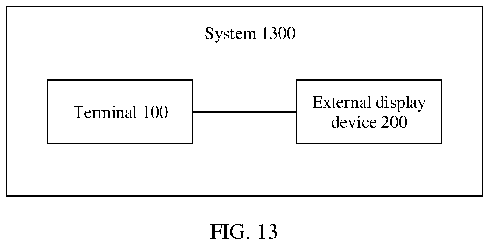

FIG. 13 is a schematic architectural diagram of a system according to an embodiment of this application.

### DESCRIPTION OF EMBODIMENTS

The following clearly describes technical solutions in the embodiments of this application in detail with reference to accompanying drawings. In the descriptions of the embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of' means two or more.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of' means two or more.

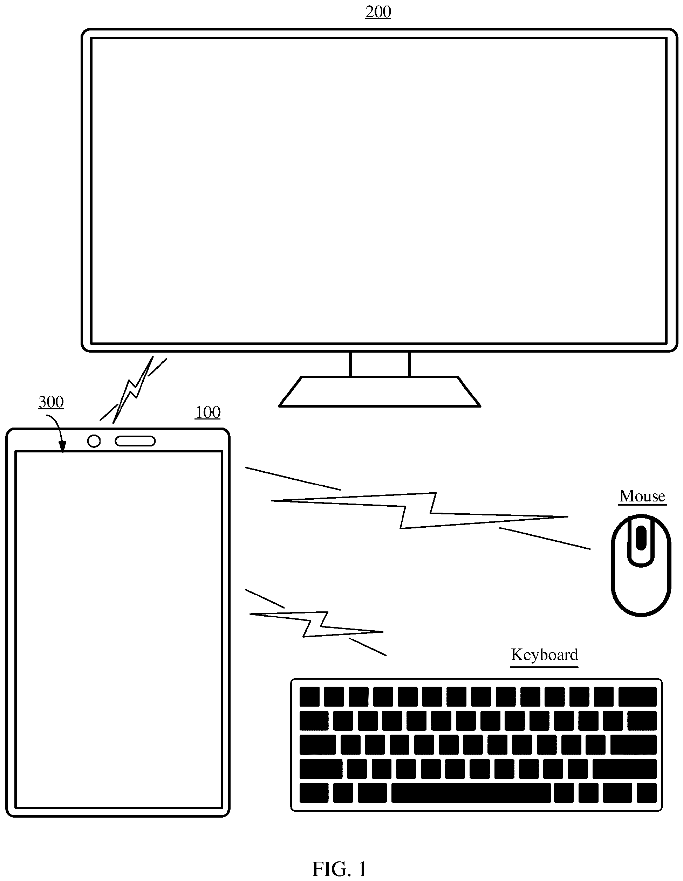

The embodiments of this application provide a message processing method. The method may be applied to an application scenario in which display data on a terminal needs to be displayed on a plurality of display screens, for example, a mobile office scenario. For example, as shown in FIG. 1, a terminal 100 may be a mobile phone, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in this embodiment of this application. An external display device 200 in this embodiment of this application may be any display apparatus such as a display of a PC, a television, a tablet computer, or a projector.

As shown in FIG. 1, the terminal 100 may establish a wireless connection to the external display device 200 in a wireless communication manner (for example, Wi-Fi or Bluetooth), or the terminal 100 may establish a wireless connection to an external device (for example, a mouse or a keyboard) in a wireless communication manner (for example, Wi-Fi or Bluetooth).

Alternatively, the terminal 100 may establish a connection to the external display device 200 in a wired communication manner (for example, a data line), or the terminal 100 may establish a connection to an external device (for example, a mouse or a keyboard) in a wired communication manner (for example, a data line). This is not limited in this embodiment of this application.

In this embodiment of this application, the terminal 100 may alternatively be connected to the external display device 200 by using a transfer device (not shown in FIG. 1). The transfer device may be plugged into a universal serial bus (universal serial bus, USB) interface of a data line of the terminal 100, and a Type-c interface of the data line of the terminal is plugged into the terminal 100. The transfer device may be further connected to the external display device 200 by using a transfer line. The transfer line may include any one of a high definition multimedia interface (high definition multimedia interface, HDMI) connection line, a video graphics array (video graphics array, AGI) connection line, a digital visual interface (digital visual interface, DVI) connection line, and the like.

The transfer device in this embodiment of this application may be a mobile high-definition link (mobile high-definition link, MHL) device. The MHL device may simultaneously transmit an audio signal and a video signal in the terminal 100 (for example, a mobile phone) to the external display device 200 for display.

The terminal 100 may be used as a main control device, and the external display device 200 may be used as a secondary device of the terminal 100. After the terminal 100 establishes a connection to the external display device 200, the terminal 100 has two displays. One of the two displays is a touchscreen 300 of the terminal 100, and the other is a display of the external display device 200 connected to the terminal 100.

After the terminal 100 establishes a connection to the external display device 200, the terminal 100 may project display content onto a screen container of the external display device 200 in a single-source display manner or a multi-source display manner, and display the display content by using the external display device 200.

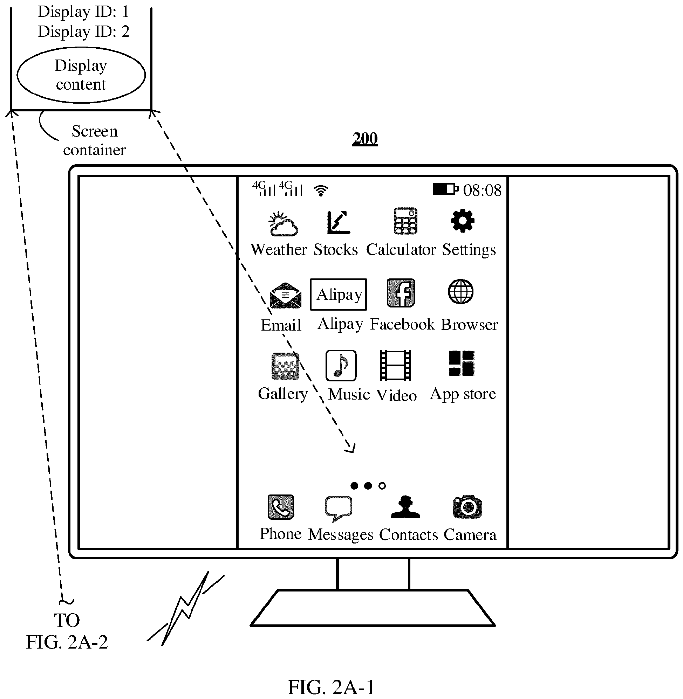

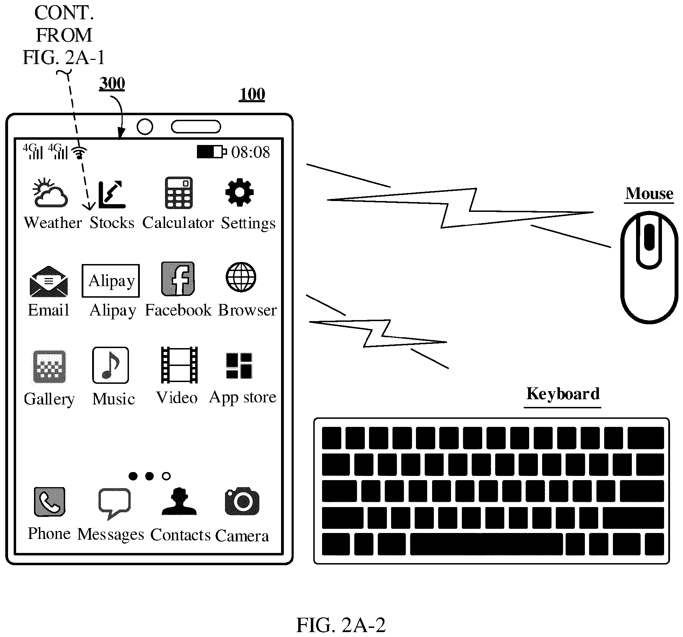

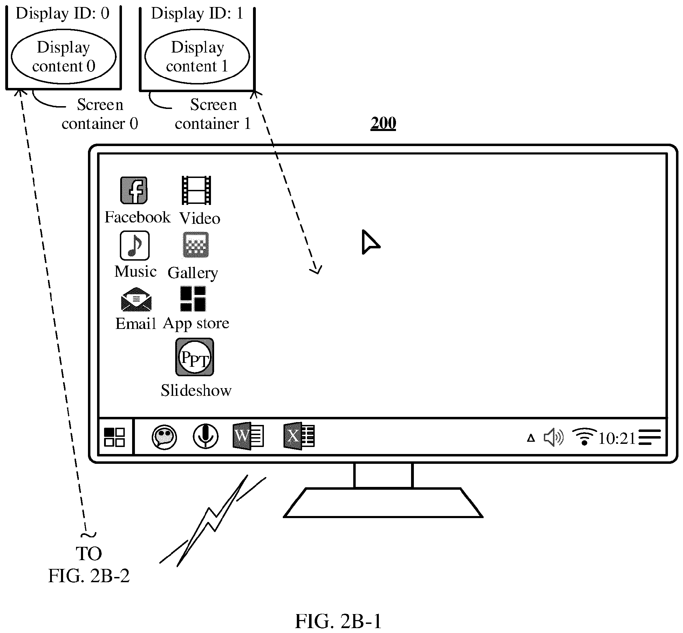

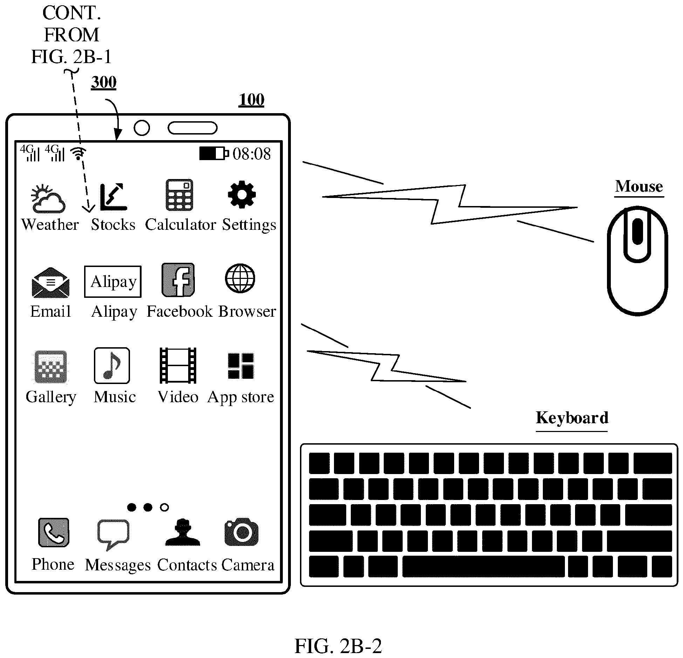

Single-source display indicates that signal sources of display interfaces of different displays such as the touchscreen of the terminal 100 and the external display device 200 are the same, and multi-source display indicates that a signal source of a display interface of the touchscreen of the terminal 100 is independent of a signal source of a display interface of the external display device 200.
(1) Single-source display:
   When the terminal 100 projects display content onto a display of the external display device in a single-source display manner, as shown in FIG. 2A-1 and FIG. 2A-2, before the terminal 100 establishes a connection to the external display device 200, the terminal 100 stores generated to-be-displayed display content at a specified location of a memory (an area in which the to-be-displayed display content on a screen is stored is referred to as the screen container in this application). In this way, the touchscreen 300 of the terminal 100 may display a related image by reading the display content in the screen container. After the terminal 100 establishes a connection to the external display device 200, still as shown in FIG. 2A-1 and FIG. 2A-2, the terminal 100 may send the display content in the screen container to the external display device 200, so that the external display device 200 displays display content that is the same as that of the terminal 100, to implement synchronous display of the terminal 100 and the external display device 200.
(2) Multi-source display:
   When the terminal 100 projects, in a multi-source display manner, an application installed on the terminal 100 onto a display of the external display device 200, as shown in FIG. 2B-1 and FIG. 2B-2, before the terminal 100 establishes a connection to the external display device 200, the terminal 100 stores generated to-be-displayed display content 0 in a screen container 0 of a memory. In this way, when reading the display content 0 in the screen container 0, the touchscreen 300 of the terminal 100 may display a related display interface on the touchscreen 300 of the terminal 100. The terminal 100 stores generated to-be-displayed display content 1 in a screen container 1 of the memory. In this way, when reading the display content 1 in the screen container 1, the external display device 200 may display a related display interface on the external display device 200.

After the terminal 100 establishes a connection to the external display device 200, the terminal 100 may identify related specification information of the display of the external display device 200 connected to the device 100, for example, resolution and dots per inch (Dots Per Inch, DPI) of the display of the external display device 200. In this case, as shown in FIG. 2B-1 and FIG. 2B-2, the terminal 100 may establish an independent screen container, namely, the screen container 1 in FIG. 2B-1 and FIG. 2B-2, for the external display device 200 in the memory based on the specification information of the display of the external display device 200. The screen container 1 and the screen container 0 may be distinguished by using different display identifiers (Display ID) (for example, a display ID 0: which may indicate the screen container of the touchscreen 300 of the terminal 100, and a display ID 1: which may indicate the screen container of the external display device 200).

For an application that supports both displaying on the terminal 100 and displaying on the external display device 200, the application usually stores two display resources in the terminal 100. One display resource corresponds to the terminal 100, and the other display resource corresponds to the external display device 200. Same display content (for example, an application icon) may have different layouts and display effects in the different display resources.

In this case, after the terminal 100 establishes a connection to the external display device 200, still as shown in FIG. 2B-1 and FIG. 2B-2, the terminal 100 may read the display resource stored in the external display device 200, and store, in the screen container 1, desktop display content such as an application icon, an icon layout, and a status bar in the display resource. In this way, after sending the display content in the screen container 1 to the external display device 200, the terminal 100 may independently project icons and/or interfaces of applications installed on the terminal 100 onto the external display device 200. Subsequently, the terminal 100 and the external display device 200 may independently run two display interfaces in a same operating system based on display content in respective screen containers.

It should be noted that the screen container may be specifically a cache queue used to store display content generated by each task in a task queue when the terminal 100 runs each task in the task queue. A task located at the head of the task queue is usually a task that is currently running on the terminal, and display content generated when the terminal runs the task may be stored in a queue head of the cache queue. The touchscreen 300 of the terminal 100 or the external display device 200 always reads the display content at the queue head in the cache queue for display.

When the terminal 100 projects the display content onto the display of the external display device 200 in a multi-source display manner, the terminal 100 may receive, by using a connected external device (for example, a mouse or a keyboard), input of a user on an operation interface displayed on the external display device 200. The terminal 100 may receive, by using the touchscreen 300 of the terminal 100, touch input of the user on an operation interface displayed on the touchscreen 300 of the terminal 100. Optionally, if the external display device 200 is also the touchscreen 300, the terminal 100 may also receive, by using the external display device 200, touch input of the user on the operation interface displayed on the external display device 200.

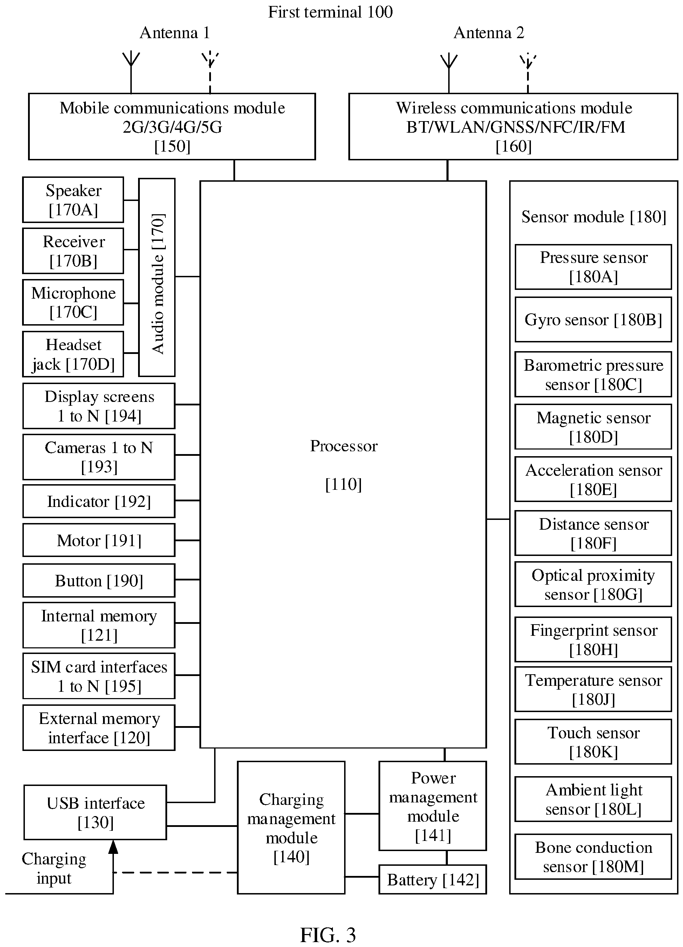

FIG. 3 is a schematic structural diagram of a terminal 100.

The terminal 100 is used as an example below to describe the embodiments in detail. It should be understood that the terminal 100 shown in FIG. 3 is merely an example, and the terminal 100 may have more or fewer components than those shown in FIG. 3, may combine two or more components, or may have different component configurations. Various components shown in FIG. 3 may be implemented in hardware that includes one or more signal processing and/or application-specific integrated circuits, in software, or in a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the embodiments of the present invention does not constitute a specific limitation on the terminal 100. In some other embodiments of this application, the terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural-network processing unit, NPU), and/or the like. Different processing units may be independent devices, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store an instruction and data. In some embodiments, the memory in the processor 110 is a cache memory. The memory may store an instruction or data just used or cyclically used by the processor 110. If the processor 110 needs to use the instruction or the data again, the processor 110 may directly invoke the instruction or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be used for audio communication, to sample, quantize, and code an analog signal. In some embodiments, the audio module 170 may be coupled to the wireless communications module 160 through the PCM bus interface. In some embodiments, the audio module 170 may also transmit an audio signal to the wireless communications module 160 through the PCM interface, to implement the function of answering a call by using a Bluetooth headset. Both the I2S interface and the PCM interface may be used for audio communication.

The UART interface is a universal serial data bus used for asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to peripheral devices such as the display screen 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal 100. The processor 110 communicates with the display screen 194 through the DSI interface, to implement a display function of the terminal 100.

The GPIO interface may be configured through software. The GPIO interface may be configured as a control signal, or may be configured as a data signal. In some embodiments, the GPIO interface may be configured to connect the processor 110 to the camera 193, the display screen 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that complies with a USB standard specification, and may be specifically a mini USB interface, a micro USB interface, a USB Type-C interface, or the like. The USB interface 130 may be configured to connect to the charger to charge the terminal 100, or may be configured to transmit data between the terminal 100 and a peripheral device, or may be configured to connect to a headset to play audio by using the headset. The interface may be further configured to connect to another terminal such as an AR device.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive charging input from the charger. The charger may be a wireless charger, or may be a wired charger. In some embodiments of wired charging, the charging management module 140 may receive charging input from the wired charger through the USB interface 130. In some embodiments of wireless charging, the charging management module 140 may receive wireless charging input by using a wireless charging coil of the terminal 100. The charging management module 140 may further supply power to the terminal by using the power management module 141 while charging the battery 142.

The power management module 141 is configured to connect the battery 142 and the charging management module 140 to the processor 110. The power management module 141 receives input from the battery 142 and/or the charging management module 140, and supplies power to the processor 110, the internal memory 121, an external memory, the display screen 194, the camera 193, the wireless communications module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented through the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the terminal 100 may be configured to cover one or more communications frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that includes 2G/3G/4G/5G or the like and that is applied to the terminal 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation by using the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (not limited to the speaker 170A, the receiver 170B, and the like), or displays an image or a video through the display screen 194. In some embodiments, the modem processor may be an independent device. In some other embodiments, the modem processor may be independent of the processor 110, and is disposed in a same device as the mobile communications module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal 100. The wireless communications module 160 may be one or more devices that integrate at least one communications processing module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communications module 150 of the terminal 100 are coupled, and the antenna 2 and the wireless communications module 160 of the terminal 100 are coupled, so that the terminal 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation systems, SBAS).

The terminal 100 implements a display function by using the GPU, the display screen 194, the application processor, and the like. The GPU is a microprocessor for image processing, and is connected to the display screen 194 and the application processor. The GPU is configured to perform mathematical and geometric calculation, and is used for graphics rendering. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the terminal 100 may include one or N display screens 194, where N is a positive integer greater than 1.

The terminal 100 can implement the photographing function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the terminal 100 may include one or N cameras 193, where N is a positive integer greater than 1.

The digital signal processor is configured to process a digital signal. In addition to a digital image signal, the digital signal processor may further process another digital signal. For example, when the terminal 100 selects a frequency, the digital signal processor is configured to perform Fourier transform on frequency energy and the like.

The video codec is configured to: compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. Applications such as intelligent cognition of the terminal 100 may be implemented by using the NPU, for example, image recognition, facial recognition, voice recognition, and text understanding.

The external memory interface 120 may be configured to connect to an external storage card, for example, a micro SD card, to extend a storage capability of the terminal 100. The external storage card communicates with the processor 110 through the external memory interface 120, to implement a data storage function. For example, files such as music and a video are stored in the external storage card.

The internal memory 121 may be configured to store computer executable program code. The executable program code includes an instruction. The processor 110 performs various function applications of the terminal 100 and data processing by running the instruction stored in the internal memory 121. The internal memory 121 may include a program storage area and a data storage area. The program storage area may store an operating system, an application required by at least one function (for example, a sound playing function or an image playing function), and the like. The data storage area may store data (for example, audio data or a phone book) created in a use process of the terminal 100, and the like. In addition, the internal memory 121 may include a high-speed random access memory, or may include a non-volatile memory, for example, at least one magnetic disk storage device, a flash storage device, a universal flash storage (universal flash storage, UFS), or the like.

The terminal 100 can implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to: code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The terminal 100 may be used to listen to music or answer a call in a hands-free mode over the speaker 170A.

The receiver 170B, also referred to as an "earpiece", is configured to convert an audio electrical signal into a sound signal. When a call is answered or voice information is received by using the terminal 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and further implement a noise reduction function. In some other embodiments, three, four, or more microphones 170C may alternatively be disposed in the terminal 100, to collect a sound signal, reduce noise, further identify a sound source, implement a directional recording function, and the like.

The headset jack 170D is configured to connect to a wired headset. The headset jack 170D may be a USB interface 130, a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are a plurality of types of pressure sensors 180A, for example, a resistive pressure sensor, an inductive pressure sensor, a capacitive pressure sensor, and the like. The capacitive pressure sensor may include at least two parallel plates that have conductive materials. When a force acts on the pressure sensor 180A, capacitance between electrodes changes. The terminal 100 determines pressure intensity based on a change in the capacitance. When a touch operation is performed on the display screen 194, the terminal 100 detects intensity of the touch operation by using the pressure sensor 180A. The terminal 100 may further calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to a first pressure threshold is performed on a Messages icon, an instruction for creating a new SMS message is executed.

The gyro sensor 180B may be configured to determine a movement posture of the terminal 100. In some embodiments, an angular velocity of the terminal 100 around three axes (namely, axes x, y, and z) may be determined by using the gyro sensor 180B. The gyro sensor 180B may be configured to perform image stabilization during photographing. For example, when a shutter is pressed, the gyro sensor 180B detects an angle at which the terminal 100 jitters, obtains, through calculation based on the angle, a distance for which a lens module needs to compensate, and allows a lens to cancel the jitter of the terminal 100 through reverse motion, to implement image stabilization. The gyroscope sensor 180B may be further used in navigation and motion sensing game scenarios.

The barometric pressure sensor 180C is configured to measure barometric pressure. In some embodiments, the terminal 100 calculates an altitude by using a value of the barometric pressure measured by the barometric pressure sensor 180C, to assist in positioning and navigation.

The magnetic sensor 180D includes a Hall sensor. The terminal 100 may detect opening and closing of a flip leather case by using the magnetic sensor 180D. In some embodiments, when the terminal 100 is a clamshell phone, the terminal 100 may detect opening and closing of a flip cover by using the magnetic sensor 180D. Further, a feature, for example, automatic unlocking of a flip cover is set based on a detected opening or closing state of the leather case or a detected opening or closing state of the flip cover.

The acceleration sensor 180E may detect magnitude of accelerations in various directions (usually on three axes) of the terminal 100, and may detect magnitude and a direction of the gravity when the terminal 100 is still. The acceleration sensor 180E may be further configured to identify a posture of the terminal, and is applied to an application such as switching between a landscape mode and a portrait mode or a pedometer.

The distance sensor 180F is configured to measure a distance. The terminal 100 may measure the distance in an infrared or a laser manner. In some embodiments, in a photographing scenario, the terminal 100 may measure the distance by using the distance sensor 180F to implement quick focusing.

For example, the optical proximity sensor 180G may include a light-emitting diode (LED) and an optical detector, for example, a photodiode. The light-emitting diode may be an infrared light-emitting diode. The terminal 100 emits infrared light by using the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear to make a call, to automatically perform screen-off for power saving. The optical proximity sensor 180G may also be used in a leather case mode or a pocket mode to automatically unlock or lock the screen.

The ambient light sensor 180L is configured to sense luminance of ambient light. The terminal 100 may adaptively adjust brightness of the display screen 194 based on the sensed ambient light brightness. The ambient light sensor 180L may also be configured to automatically adjust a white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor near the temperature sensor 180J, to reduce power consumption for thermal protection. In some other embodiments, when the temperature is lower than another threshold, the terminal 100 heats the battery 142 to prevent the terminal 100 from being shut down abnormally because of a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display screen 194, and the touch sensor 180K and the display screen 194 form a touchscreen, which is also referred to as a "touchscreen". The touch sensor 180K is configured to detect a touch operation performed on or near the touch sensor 180K. The touch sensor may transmit the detected touch operation to the application processor, to determine a type of a touch event. Visual output related to the touch operation may be provided by using the display screen 194. In some other embodiments, the touch sensor 180K may alternatively be disposed on a surface of the terminal 100 at a location different from that of the display screen 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or or may be a touch button. The terminal 100 may receive button input, and generate button signal input related to a user setting and function control of the terminal 100.

The motor 191 may generate a vibration prompt. The motor 191 may be configured to produce a vibration prompt for an incoming call, or may be configured to produce touch vibration feedback. For example, touch operations performed on different applications (for example, photographing and audio playing) may correspond to different vibration feedback effects. The motor 191 may also correspond to different vibration feedback effects for touch operations performed on different areas of the display screen 194. Different application scenarios (for example, a time reminder, information receiving, an alarm clock, a game, and the like) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted in a same SIM card interface 195. The plurality of cards may be of a same type, or may be of different types. The SIM card interface 195 may also be compatible with different types of SIM cards. The SIM card interface 195 may also be compatible with an external storage card. The terminal 100 interacts with a network by using the SIM card, to implement functions such as conversation and data communication. In some embodiments, the terminal 100 uses an eSIM, namely, an embedded SIM card. The eSIM card may be embedded into the terminal 100, and cannot be separated from the terminal 100.

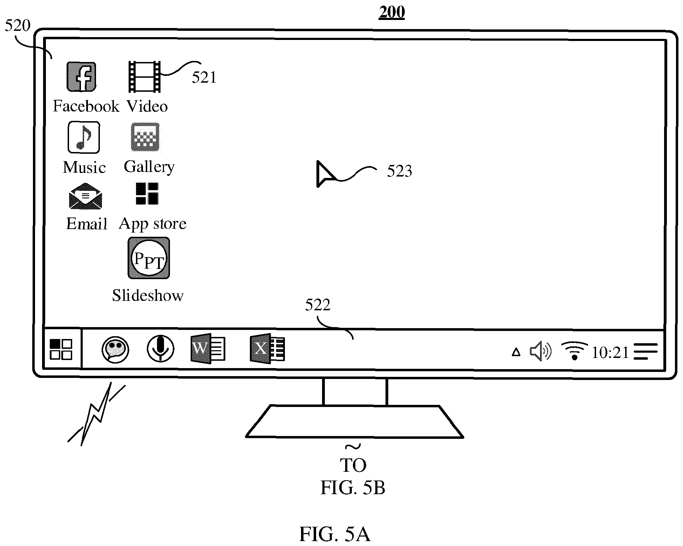

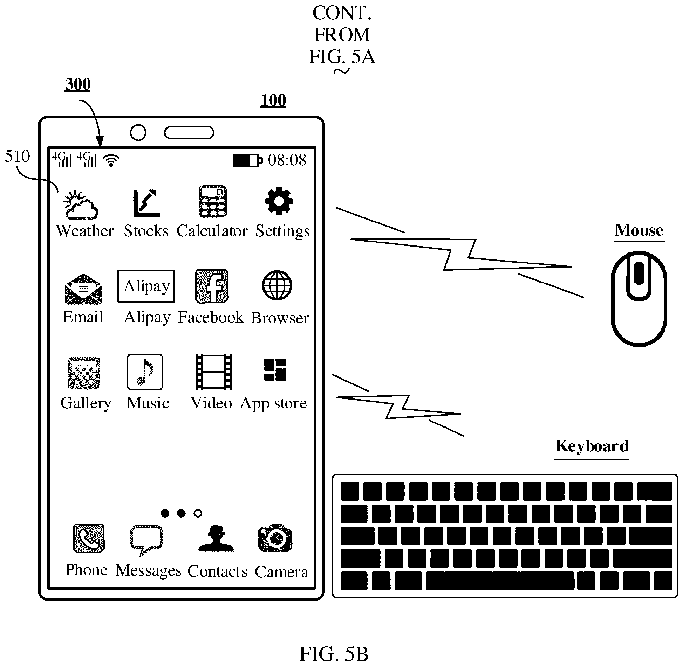

Currently, when the terminal 100 enables a PC mode and establishes a connection to the external display device 200, the terminal 100 may display two different interfaces on the touchscreen of the terminal 100 and the external display device 200 in a multi-source display manner. For example, the terminal 100 may display a video play interface (for example, a video play interface 530 in FIG. 5A and FIG. 5B) by using the external display device 200, and the terminal 100 may display a home screen (for example, a home screen 510 in FIG. 5A and FIG. 5B) on the touchscreen 300.

When the terminal 100 displays two independent interfaces by using the touchscreen 300 of the terminal 100 and the external display device 200 in a multi-source display manner, the terminal 100 may play a video, present a slideshow, display a picture, or the like by using the external display device 200 in full screen mode. If the terminal 100 has a notification message (for example, a notification of a new SMS message) pushed by a notification center, the terminal 100 may display the notification message through the touchscreen 300 of the terminal 100. When a user views a slideshow presented in full screen mode on the external display device 200, if the user expects to view the notification message by using the external display device 200, the user needs to exit slideshow presentation that is currently being performed in full screen mode, and then open the notification center application displayed on the external display device 200, so that the user can view the complete notification message. After the user views the notification message, the user needs to perform an operation again to play the slideshow in full screen mode again. Such an operation process affects user experience of watching a slideshow, a video, or a picture in full screen mode, especially when the terminal 100 continuously receives message notifications (for example, the terminal 100 continuously receives new SMS messages). If the user needs to view these messages on the external display device 200, full-screen playing of the video, full-screen presentation of the slideshow, or full-screen display of the picture on the external display device 200 needs to be continuously enabled or disabled, which brings bad experience to the user.

To resolve the foregoing problem, an embodiment of this application provides a message processing method. If the external display device 200 presents a slideshow, plays a video, or displays a picture in full screen mode, when a message notification arrives on the terminal 100, the terminal 100 may display the message notification on the touchscreen of the terminal 100, and display prompt information of the external display device 200 on the external display device 200. After the terminal 100 receives, by using an external device (for example, a mouse or a keyboard), an input operation performed by a user on an interface displayed on the external display device 200, the external display device 200 may simultaneously display, in split-screen mode, an interface displayed on the touchscreen of the display terminal 100 and an interface for presenting the slideshow, an interface for playing the video, or an interface for displaying the picture on the external display device 200. The user may process the notification message (for example, reply to an SMS message) on the external display device 200. After the user processes the notification message, the terminal 100 may further receive, by using the external device (for example, the mouse or the keyboard), another input operation performed by the user on a display interface of the external display device 200, and the external display device 200 may display, in full screen mode in response to the another input operation, the interface for presenting the slideshow, the interface for playing the video, or the interface for displaying the picture. In this way, the user can simultaneously view the interface for presenting the slideshow, the interface for playing the video, or the interface for displaying the picture, and the interface displayed on the touchscreen of the terminal 100, so that the user can directly process the notification message on the external display device 200.

The following describes a diagram of a software architecture of a terminal 100 in the embodiments of this application.

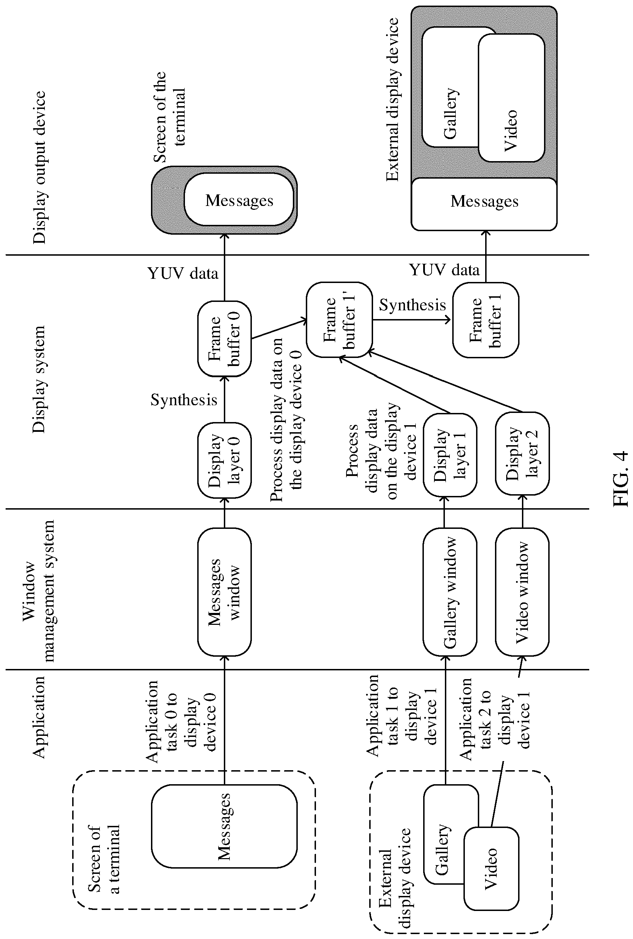

FIG. 4 is a block diagram of a software architecture according to an embodiment of this application. In some embodiments, a software architecture about display output in an Android system may include an application, a window management system, a display system, and a display output device.

As shown in FIG. 4, the applications may include a Video application, a Gallery application, a Messages application, and the like. These applications may be displayed on a screen of the terminal 100, or may be displayed on an external display device. For example, an interface of the Messages application may be displayed on the screen of the terminal 100, and an interface of the Gallery application or a display interface of the Video application may be displayed on the external display device. The terminal 100 may output an application task 0 (for example, display of the interface of the Messages application) to a display device 0 (namely, the screen of the terminal 100), and the terminal 100 may output an application task 1 (for example, display of the interface of the Gallery application) and an application task 2 (for example, display of the interface of the Video application) to a display device 1 (namely, the external display device).

In the window management system, interfaces of various applications are views or windows. Because a plurality of views are superimposed, the window management system needs to manage addition, deletion, a hierarchy, animation, and the like of each window.

The display system is configured to render, based on a hierarchy, each window managed by the window management system. A window at an upper layer has a higher display priority, and a window at a lower layer may be overlaid. An output destination for the rendering is a screen of the terminal or a screen of the Messages application.

The display output device includes the screen of the terminal 100 and the external display device.

Usually, windows on different screens do not affect each other. For example, the display system may synthesize a display layer 0 of the application task 0 to a frame buffer (frame buffer, FB) 0, and output display data (for example, YUV data) in the frame buffer 0 (which may be the screen container 0) to the screen of the terminal for display. The display system may synthesize a display layer 1 of the application task 1 and a display layer 2 of the application task 2 to a frame buffer 1 (which may be the screen container 1), and output display data (for example, YUV data) in the frame buffer 1 to the external display device for display.

In this embodiment of this application, an improvement shown in FIG. 4 is made to the display system, so that the external display device can simultaneously display, in split-screen mode, an interface (for example, an interface of the application task 1 or an interface of the application task 2) originally displayed on the external display device and an interface (for example, an interface of the application task 0) displayed on the screen of the terminal 100. As shown in FIG. 4, the display system may perform necessary processing on display data on the display device 0, and perform necessary processing on display data on the display device 1. The display system may synthesize display data on the display device 0 and display data on the display device 1 that are obtained after the necessary processing to a frame buffer 1', and then synthesize display data in the frame buffer 1' to the frame buffer 1. Then, the display system outputs the display data (for example, the YUV data) in the frame buffer 0 to the screen of the terminal 100 for display. In other words, the screen of the terminal 100 displays the interface of the Messages application. The display system outputs the display data (for example, the YUV data) in the frame buffer 1 to the external display device for display. In other words, the terminal 100 displays, in split-screen mode, the interface that is of the Messages application and that is displayed on the screen of the terminal 100 and the interface (or the interface of the Video application) that is of the Gallery application and that is originally displayed on the external display.

The following describes, in detail with reference to specific embodiments, a split-screen display method provided in an embodiment of this application.

A terminal 100 is connected to an external display device 200. The terminal 100 may establish a communication connection to the external display 200 in a wireless communication manner such as Bluetooth, Wi-Fi, or ZigBee (Zigbee), or the terminal 100 may establish a communication connection to the external display 200 in a wired manner (for example, by using an HDMI connection line). This is not limited in this embodiment of this application.

The terminal 100 may be connected to an external input device (for example, a mouse or a keyboard). The terminal 100 may establish a communication connection to the external input device in a wireless communication manner such as Bluetooth, Wi-Fi, or ZigBee (Zigbee), or the terminal 100 may establish a communication connection to the external input device in a wired communication manner. This is not limited in this embodiment of this application.

After the terminal 100 establishes a connection to the external display 200, the terminal 100 may display a first home screen on a touchscreen 300, and display a second home screen by using the external display device 200 in a multi-source display manner. The first home screen is different from the second home screen. The terminal 100 may receive, through the touchscreen, an input operation performed by a user on the first home screen, and the terminal 100 may receive, by using the external input device (for example, the mouse or the keyboard), an input operation performed by the user on the second home screen.

For example, as shown in FIG. 5A and FIG. 5B, after the terminal 100 establishes a connection to the external display device 200, the terminal 100 may display a home screen 510 through the touchscreen 300. The home screen 510 displays a page on which an application icon is placed. The page may include one or more application icons (for example, a Weather application icon, a Stocks application icon, a Calculator application icon, a Settings application icon, an Email application icon, an Alipay application icon, a Facebook application icon, a Browser application icon, a Gallery application icon, a Music application icon, a Video application icon, an App store icon, and the like), and a page indicator is further included below the plurality of application icons, to indicate a location relationship between a currently displayed page and another page. There are a plurality of tray icons (for example, a Dialer application icon, a Messages application icon, a Contacts application icon, and a Camera application icon) below the page indicator. The tray application icons remain displayed after the page is switched. The page may include the plurality of application icons and the page indicator. The page indicator may alternatively not be a part of the page and exists independently.

As shown in FIG. 5A and FIG. 5B, after the terminal 100 establishes a connection to the external display device 200, the terminal 100 may display a home screen 520 by using the external display device 200. A plurality of application icons (for example, a Facebook application icon, a Video application icon 521, a Music application icon, a Gallery application icon, an Email application icon, an App store icon, and a Slideshow application icon) are displayed on the home screen 520. The home screen 520 further includes a taskbar 522. The taskbar 522 may include one or more application shortcuts (for example, a WeChat application shortcut, a Voice assistant application shortcut, a Word application shortcut, and an Excel application shortcut), a status bar (including a volume adjustment icon, a Wi-Fi signal icon, and time), and the like.

The home screen 520 displayed on the external display device 200 is similar to an operation interface in a Windows system. A mouse pointer 523 may be displayed on the external display device 200, and the mouse pointer 523 may be displayed on all interfaces displayed on the external display device 200. The terminal 100 may receive an input operation of a user by using the external mouse, for example, a left-click operation, a double left-click operation, a right-click operation, a double right-click operation, or a mouse pointer slide or drag operation performed by using the mouse pointer 523 on the external display device 200.

The terminal 100 may receive input of the user by using an external input device (for example, a mouse or a keyboard), to play a video, present a slideshow, display a picture, or the like on the external display device 200 in full screen mode.

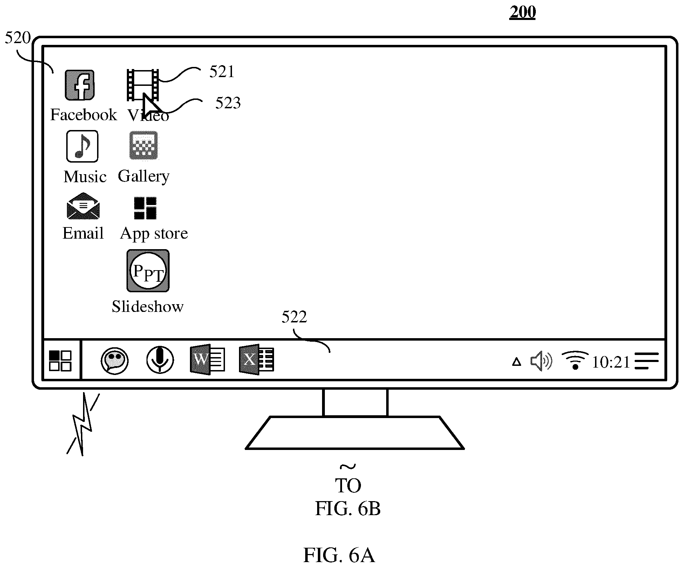

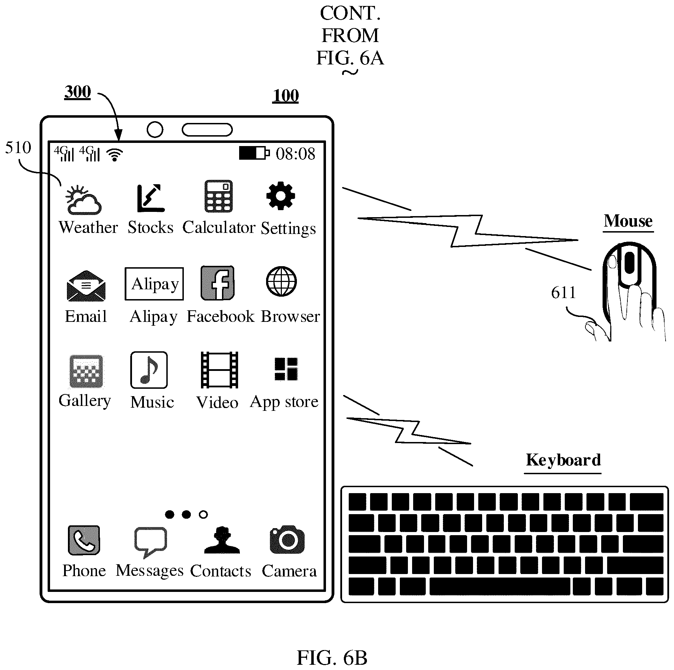

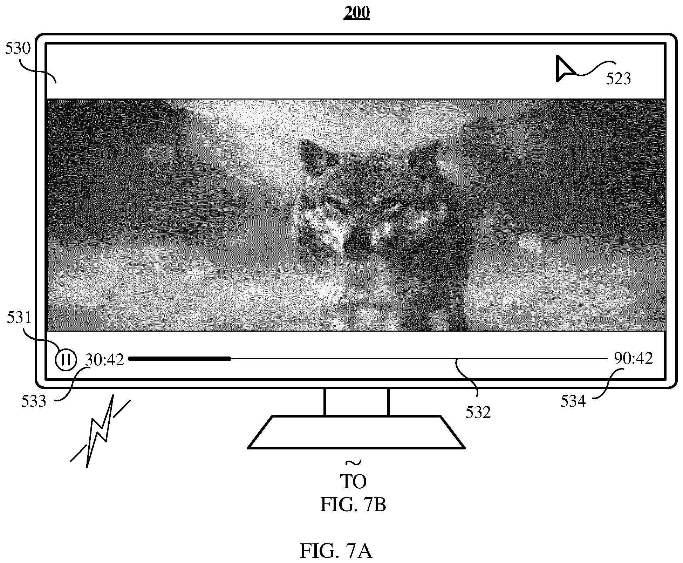

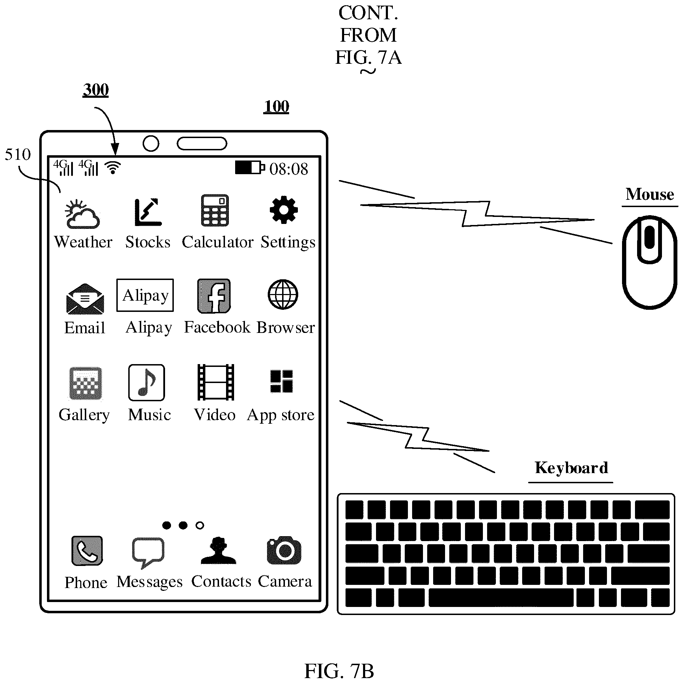

For example, as shown in FIG. 6A and FIG. 6B, the terminal 100 may receive, by using the mouse, an input operation 611 performed by the user on the Video application icon 521 on the external display device 200. The input operation 611 may be that the user operates the mouse to control the mouse pointer 523 to move to the Video application icon 521, and double left-clicks the Video application icon 521. In response to the input operation 611, the terminal 100 may display, by using the external display device 200, a video play interface 530 shown in FIG. 7A and FIG. 7B. In an implementation, the terminal 100 may first display an interface of a Video application in response to the input operation 611. The interface of the Video application may include a full-screen playing button for one or more videos. Then, the terminal 100 may receive, by using the external input device (for example, the mouse), an input operation performed by the user on the full-screen playing button. For example, the input operation performed on the full-screen playing button may be that the user operates the mouse to move the mouse pointer to the full-screen playing button, and left-clicks the full-screen playing button. In response to the input operation performed on the full-screen playing button, the terminal 100 may display, by using the external display device 200, the video play interface 530 shown in FIG. 7A and FIG. 7B.

As shown in FIG. 7A and FIG. 7B, the terminal 100 displays the video play interface 530 in full screen mode by using the external display device 200. The video play interface 530 may include a play/pause button 531, a play progress bar 532, a play progress time 533, a total video time 534, and a play image 539. The play/pause button 531 may be configured to receive input of the user, to control playing and pausing of a video. The terminal 100 may further display the mouse pointer 523 by using the external display device 200. If the terminal 100 does not receive, within a period of time (for example, 10 seconds), an input operation performed by the user on the mouse, the mouse pointer 523 may disappear. This can avoid long-time blocking of the mouse pointer 523 on the video play interface 530, and improve user experience.

After the mouse pointer 523 disappears, if the terminal 100 receives an input operation performed by the user by using the mouse (for example, moving the mouse), the mouse pointer 523 may be displayed on the video play interface 530 again. The home screen 510 may still be displayed on the touchscreen 300 of the terminal 100. In an implementation, the touchscreen 300 of the terminal 100 may alternatively be turned off after no input operation of the user is received within a period of time (for example, 30 seconds), to reduce power consumption.

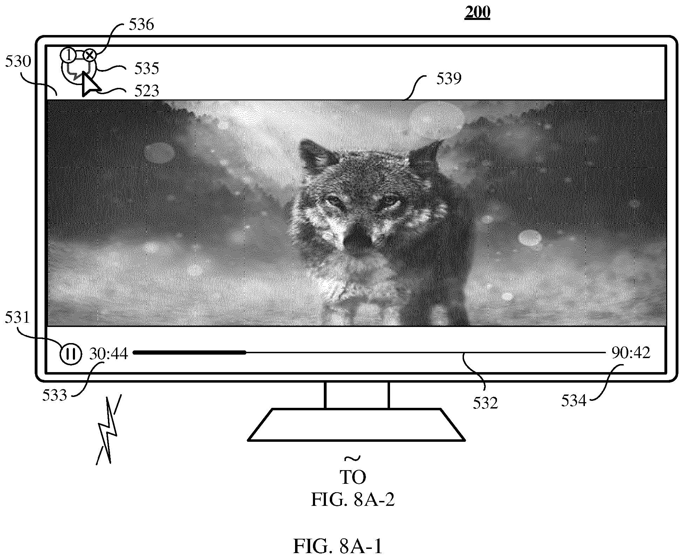

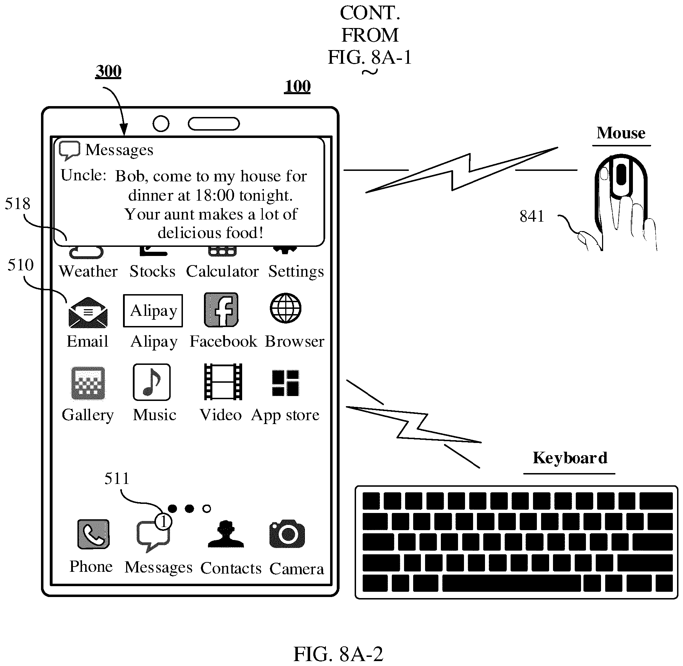

When the terminal 100 receives a new message (for example, an SMS message or a WeChat message), the terminal 100 may display a first notification (for example, a notification message 518 in FIG. 8A-2) through the touchscreen 300. The first notification is used to prompt, on the touchscreen 300, the user that there is a to-be-viewed push message of the application. The terminal 100 may display a second notification (for example, a notification message 535 in FIG. 8A-1) by using the external display device 200. The second notification is used to prompt, on the external display device 200, the user that there is a to-be-viewed push message of the application.

Specifically, after receiving the new message, the terminal 100 may store display content related to the first notification in a screen container 0 corresponding to the touchscreen 300. The touchscreen 300 may display the first notification after reading the display content that is in the screen container 0 and that is related to the first notification. After receiving the new message, the terminal 100 further stores display content related to the second notification in a screen container 1 corresponding to the external display device 200. The external display device 200 may display the second notification after reading the display content that is in the screen container 1 and that is related to the second notification.

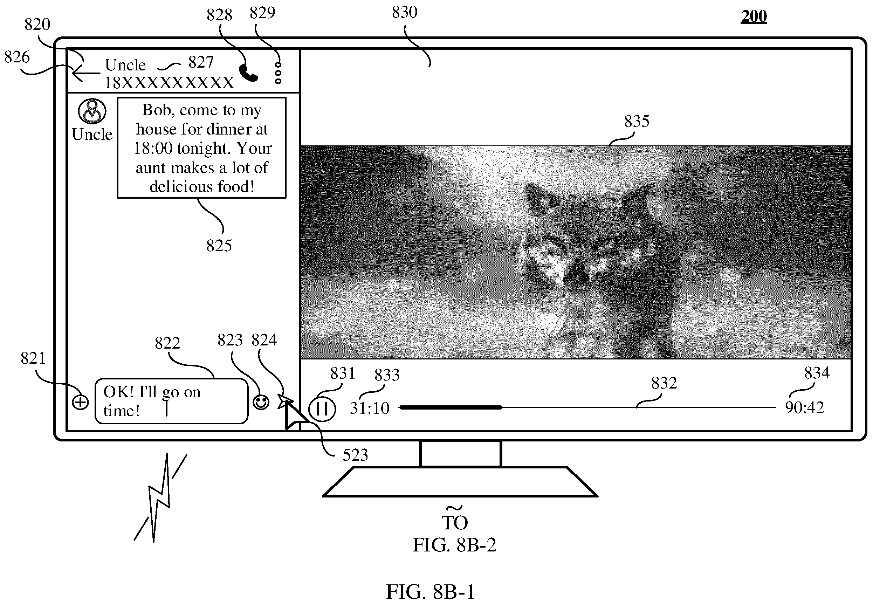

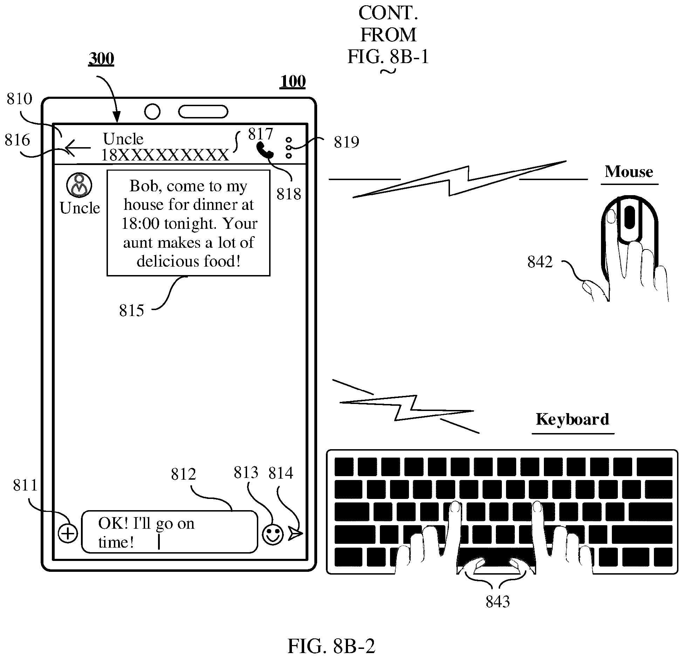

The terminal 100 may receive, by using the mouse, an input operation performed by the user on the second notification. In response to the input operation, the terminal 100 may display a detailed interface (for example, an SMS message chat interface 810 in FIG. 8B-2) for the push message of the application on the touchscreen 300. In addition, the terminal 100 may divide a display area of the external display device 200 into two parts (including a first display area and a second display area). The terminal 100 may also display a detailed interface (for example, an SMS message chat interface 820 in FIG. 8B-1) for the push message of the application in the first display area, and display, in the second display area, an interface (for example, an interface for playing a video in full screen mode, an interface for presenting a slideshow in full screen mode, or an interface for displaying a picture in full screen mode) that is originally displayed on the external display device 200 in full screen mode and that is scaled down proportionally. In this way, the user can simultaneously view, on the external display device 200, content displayed on the two screens. This facilitates an operation of the user.

For example, as shown in FIG. 8A-2, the terminal 100 receives an SMS message sent by a contact (for example, "Uncle"), and the terminal 100 may display the notification message 518 of the SMS message on the touchscreen 300. The notification message 518 may be displayed on the top of the touchscreen 300. The notification message 518 may be all or a part of content of the new SMS message, and may include a sender (for example, "Uncle") of the SMS message, content (for example, "Bob, come to my house for dinner at 18:00 tonight. Your aunt makes a lot of delicious food!") of the SMS message, and an application (namely, a Messages application) for which the notification message 518 is pushed. In some embodiments, the notification message 518 may disappear after a period of time (for example, 5 seconds). After the terminal 100 receives the SMS message sent by the contact, if the user does not open the Messages application to view the SMS message, the terminal 100 may display a mark 511 on an icon of the Messages application, to prompt the user that there is an unread SMS message.

As shown in FIG. 8A-2, when the notification message 518 for the SMS message is displayed on the touchscreen 300 of the terminal 100, the terminal 100 may further display, by using the external display device 200, the notification message 535 shown in FIG. 8A-1. The terminal 100 may receive an input operation 841 of the user by using the mouse. The input operation 841 may be left-clicking the notification message 535 by using the mouse pointer 523. In response to the input operation 841, the terminal 100 may open the Messages application, display, through the touchscreen 300 of the terminal 100, an SMS message chat interface 810 shown in FIG. 8B-2, and display, in split-screen mode by using the external display device 200, an SMS message chat interface 820 and a video play interface 830 that are shown in FIG. 8B-1.

In some embodiments, if the terminal 100 does not receive, within a period of time (for example, 30 seconds), an input operation performed by the user on the notification message 535, the notification message 535 may disappear from the external display device 200. In some embodiments, a notification closing control 536 may be displayed on the notification message 535. The notification closing control 536 may receive an input operation (for example, an operation of left-clicking the notification closing control 536 by using the mouse) of the user. In response to the input operation, the terminal 100 may not display the notification message 535 by using the external display device 200. In this way, the notification message 535 is prevented from blocking, for a long time, the interface displayed in full screen mode on the external display device 200. This improves viewing experience of the user.

As shown in FIG. 8B-2, the SMS message chat interface 810 may include an add control 811, a text input box 812, an emoticon control 813, a sending control 814, an SMS message chat box 815, a back control 816, contact information 817, a dialing control 818, and a more control 819. The add control 811 may be configured to receive input of the user, to add a picture, a voice, a video, and the like to a to-be-sent SMS message. The text input box 812 may be configured to display text information entered by the user. The sending control 814 may be configured to receive input of the user, to send an SMS message. The SMS message chat box 815 may be configured to display content of a received or sent SMS message. The back control 816 may be configured to receive input of the user, to back to an upper-level interface. The contact information 817 may include a nickname and a mobile number of a contact. The dialing control 818 may be configured to receive input of the user, to make a call to the contact (for example, "Uncle"). The more control 819 may be configured to receive input of the user, to display more functions (for example, deleting an SMS message, creating a new contact, saving to an existing contact, editing before calling, saving to a blacklist, and the like).

As shown in FIG. 8B-1, the terminal 100 may obtain the video play interface 830 by using the external display device 200 by scaling down the video play interface 530 in FIG. 8A-1, and display the video play interface 830 in a right part of the display area of the external display device 200; and proportionally adjust the SMS message chat interface 810 displayed on the touchscreen 300, and display the adjusted SMS message chat interface in a left part of the display area of the external display device 200. The SMS message chat interface 810 and the SMS message chat interface 820 have same interface elements, but are only at different sizes. The SMS message chat interface 820 may include an add control 821, a text input box 822, an emoticon control 823, a sending control 824, an SMS message chat box 825, a back control 826, contact information 827, a dialing control 828, and a more control 829. Therefore, the foregoing text descriptions of the SMS message chat interface 810 are also applicable to the SMS message chat interface 820. Details are not described herein again. The video play interface 830 is an interface obtained by proportionally scaling down the video play interface 530 in FIG. 8A-1. The video play interface 830 and the video play interface 530 include a same interface element. Therefore, for text descriptions of the video play interface 830, refer to the text descriptions of the video play interface 530 in the foregoing embodiment. Details are not described herein again.

The terminal 100 may receive an input operation performed by the user by using an external input device (for example, a mouse or a keyboard), to reply to a message in the SMS message chat interface 820 displayed on the external display device 200. For example, as shown in FIG. 8B-2, the terminal 100 may receive an input operation 843 of the user by using the keyboard. The input operation 843 may be that the user enters text information (for example, "OK! I will go on time!") in the text input box 822. The terminal 100 may display the text information in the text input box 822 by using the external display device 200, and may also display the text information in the text input box 812 through the touchscreen 300. The terminal 100 may further receive an input operation 842 of the user by using the mouse. The input operation 842 may be that the user operates the mouse to control the mouse pointer 523, and left-clicks the sending control 824. In response to the input operation 842, the terminal 100 may send text information (namely, the text information in the text input box 812) in the text input box 822 to the contact (for example, "Uncle").

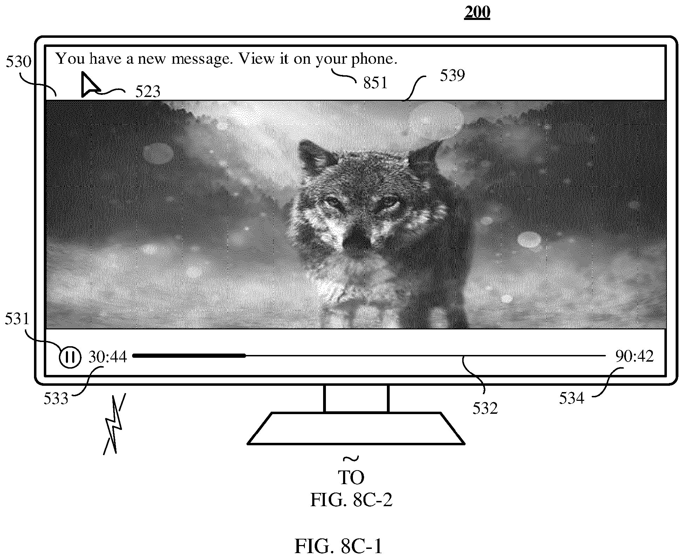

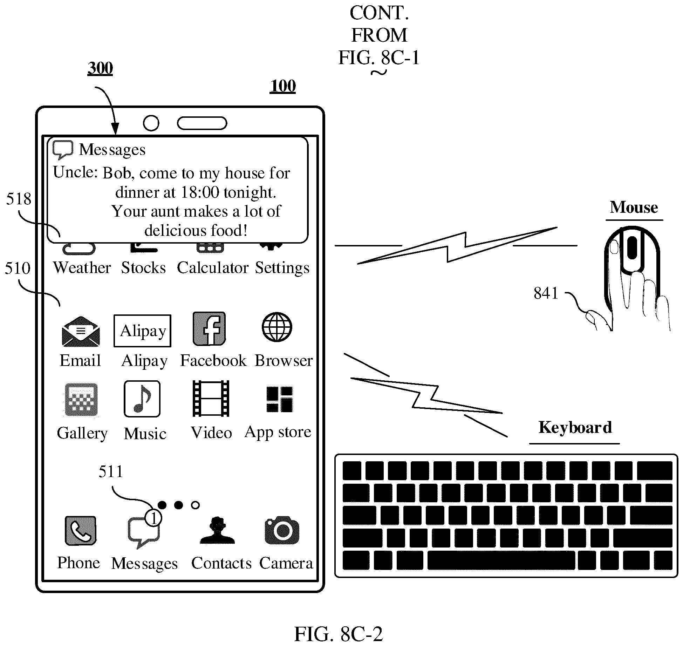

In some embodiments, if the terminal does not receive, within a period of time (for example, 3 seconds or 10 seconds), an input operation performed by the user on the notification message 535 displayed on the external display device 200 shown in FIG. 8A-1, the terminal may hide the notification message 535, and display, on the external display device 200, prompt information 851 (for example, a text prompt "You have a new message. View it on your phone") shown in FIG. 8C-1, to prompt the user to view the new SMS message on the terminal 100 (mobile phone).

In some embodiments, in addition to the input operation 841 performed on the notification message 535 in FIG. 8A-1, the terminal 100 may further receive another input operation of the user, to display, in split-screen mode by using the external display device 200, the SMS message chat interface 820 and the video play interface 830 shown in FIG. 8B-1. For example, the terminal 100 may receive an input operation (for example, an operation of pressing a key "F12", or an operation of pressing a combination of keys "Ctrl" + "Alt" + "P") of the user by using the keyboard. In response to the input operation, the terminal 100 may display, in split-screen mode by using the external display device 200, the SMS message chat interface 820 and the video play interface 830 shown in FIG. 8B-1.

In some embodiments, after the terminal 100 displays the video play interface 530 in full screen mode by using the external display device 200, the terminal 100 may receive a slide operation (for example, an operation that the mouse pointer 523 slides at a left edge location of the external display device 200 and whose sliding time is greater than a first time threshold T1) of the user by using the mouse. In response to the slide operation, the terminal 100 may display, in the first display area of the external display device 200, display content on the touchscreen 300, and display, in the second display area of the external display device 200, the video play interface 530 that is originally displayed in full screen mode on the external display device 200 and that is proportionally scaled down. In this way, the user can simultaneously operate, on the external display device 200 by using the external input device (for example, the mouse or the keyboard), the display content on the touchscreen 300 and the display content that is displayed on the external display device 200 before screen splitting. This simplifies an operation of the user.

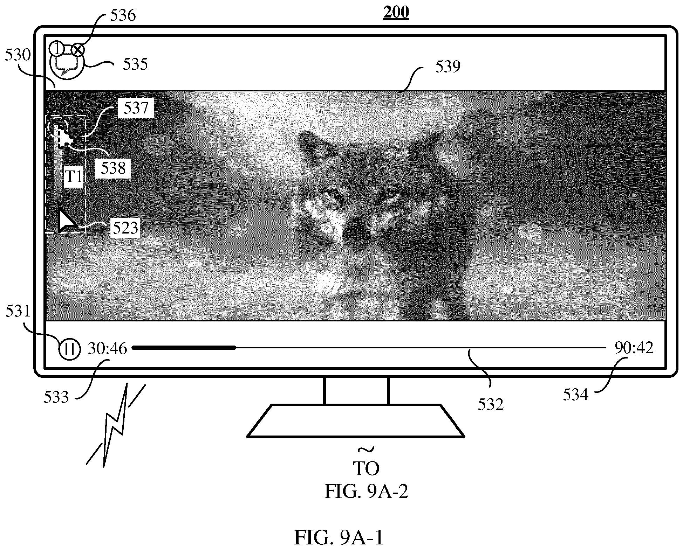

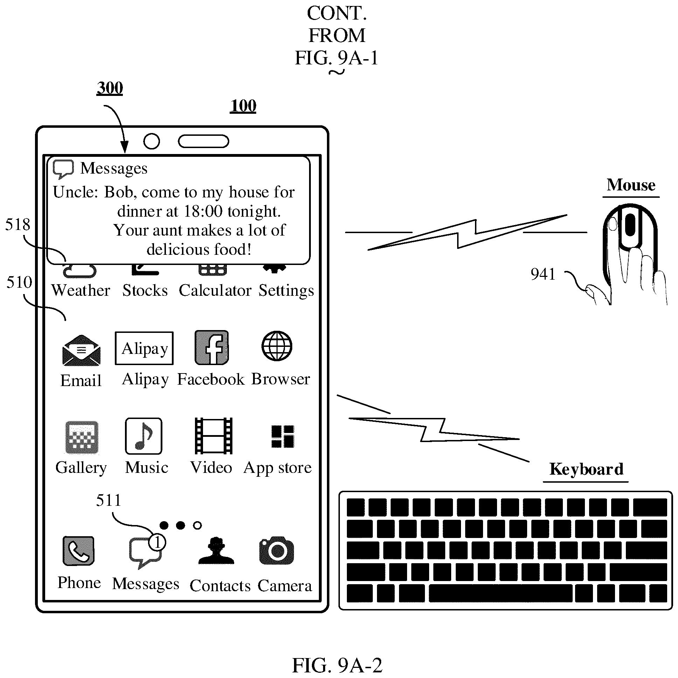

For example, as shown in FIG. 9A-1, the terminal 100 displays the video play interface 530 in full screen mode by using the external display device 200. The terminal 100 displays the home screen 510 through the touchscreen 300. When the terminal 100 receives the SMS message sent by the contact (for example, "Uncle"), the terminal 100 may display the notification message 518 of the SMS message on the touchscreen 300, and the terminal 100 may further display the notification message 535 of the SMS message by using the external display device 200. For text descriptions of the video play interface 530, refer to the foregoing embodiment shown in FIG. 7A and FIG. 7B. For text descriptions of the home screen 510, the notification message 518, and the notification message 535, refer to the foregoing embodiment shown in FIG. 8A-1 and FIG. 8A-2. Details are not described herein again.

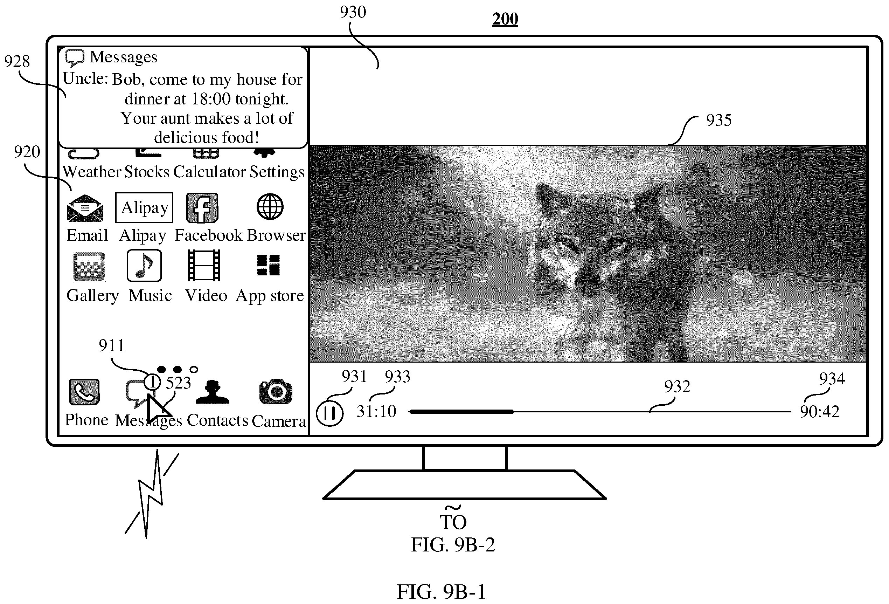

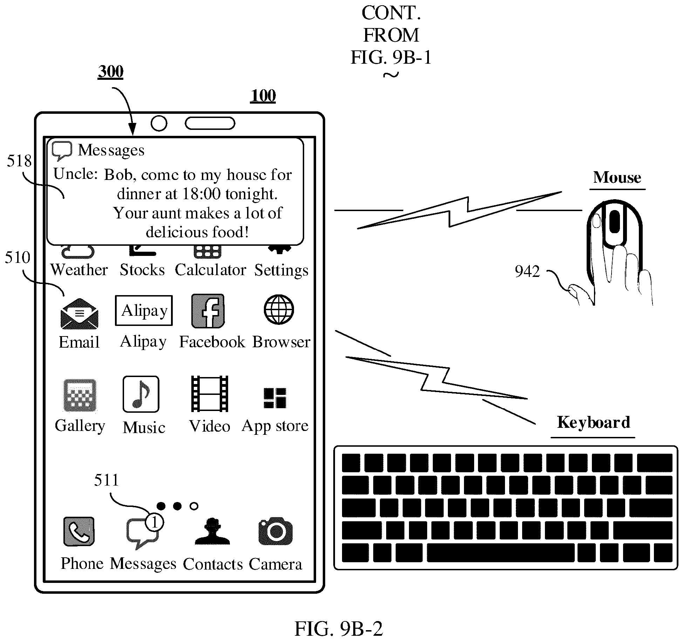

The terminal 100 may receive an input operation 941 of the user by using the mouse. The input operation 941 may be an operation that the user operates the mouse pointer 523 of the mouse to stay in a specified area 537 of the external display device 200 and whose staying time is greater than a first time threshold T1 (for example, 1.5 seconds). In response to the input operation 941, the terminal 100 may display, in split-screen mode by using the external display device 200, a home screen 920 and a video play interface 930 shown in FIG. 9B-1. As shown in FIG. 9A-1, the specified area 537 may be a display area at a left edge of the external display device 200, or the specified area 537 may be a display area at a top edge of the external display device 200. This is not limited herein. In some embodiments, the input operation 941 may alternatively be that a displacement at which the user operates the mouse pointer 523 of the mouse to slide in the specified area 537 of the external display device 200 is greater than a first distance threshold L1 (for example, 10 centimeters). A start location at which the mouse pointer 523 slides may be a location 538 shown in FIG. 9A-1.

As shown in FIG. 9B-1, the terminal 100 may display the home screen 920 in a left display area of the external display device 200, and display the home screen 930 in a right display area. The external display device 200 further displays a notification message 928 on the home screen 920. The notification message 928 and the notification message 518 are only at different percentages. The home screen 920 displayed on the external display device 200 and the home screen 510 displayed on the touchscreen 300 of the terminal 100 have same interface elements, but are only at different display percentages. Because the interface elements are the same, to be specific, the text descriptions of the home screen 510 are also applicable to the home screen 920, for text descriptions of the home screen 920, reference may be made to the text descriptions of the home screen 510. Details are not described herein again.

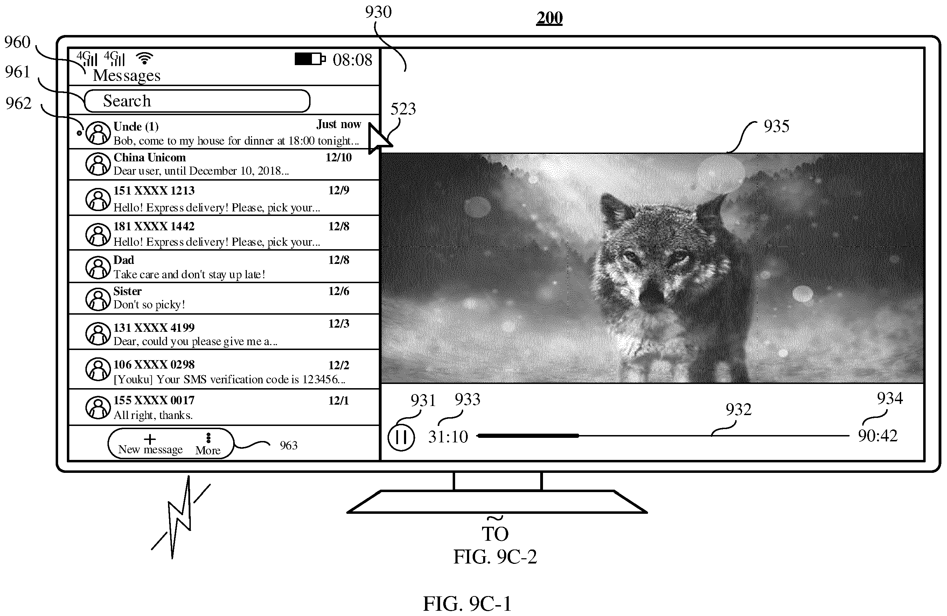

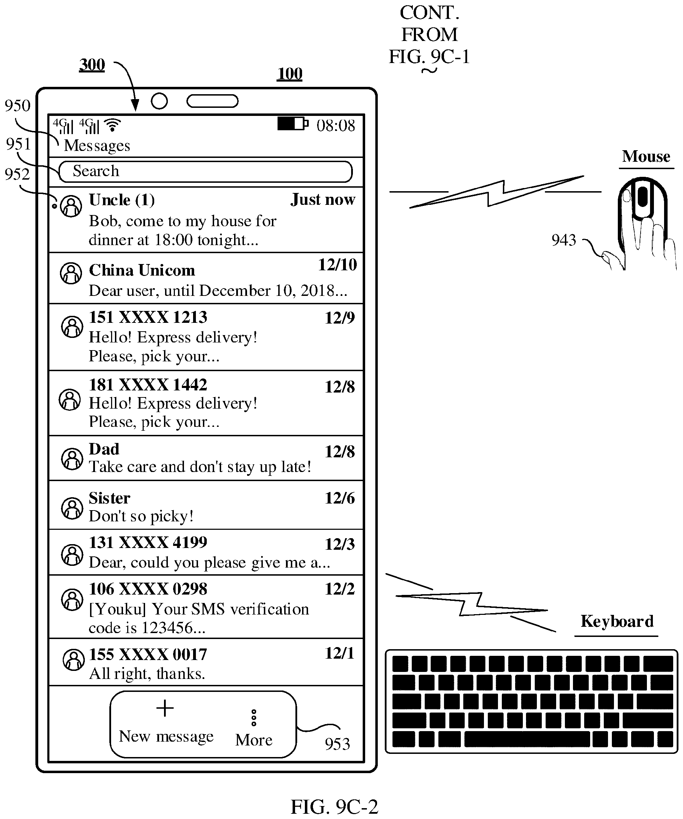

As shown in FIG. 9B-2, the terminal 100 may receive, by using the mouse, an input operation 942 (for example, an operation of left-clicking a Messages application icon 511 by using the mouse) performed by the user on the Messages application icon 511. In response to the input operation 942, the terminal 100 may display, in split-screen mode by using the external display device 200, a Messages application interface 960 and the video play interface 930 shown in FIG. 9C-1. The Messages application interface 960 may include a search box 961, one or more information entries (including an information entry 962 of the contact "Uncle"), a shortcut menu 963, and the like. The search box 961 may be configured to receive input of the user, to search for an information entry. The shortcut menu 963 includes a Create a new message control and a More control. The Create a new message control is configured to receive input of the user to establish a new SMS message chat window, and the More control may be configured to receive input of the user to display more function controls (for example, an SMS message deletion control, a my favorites control, a harassment interception control, an all read control, and a setting control). Optionally, in response to the input operation 942, the terminal 100 may further display a Messages application interface 950 through the touchscreen 300. The Messages application interface 950 includes a search box 951, one or more information entries, a shortcut menu 963, and the like. The Messages application interface 950 and the Messages application interface 960 displayed on the external display device 200 have same interface elements, but are at different display percentages. Therefore, for text descriptions of the Messages application interface 950, refer to the text descriptions of the Messages application interface 960. Details are not described herein again.

The terminal 100 may receive, by using the mouse, an input operation 943 (for example, an operation of left-clicking the information entry 962 by using the mouse) performed by the user on the information entry 962 of the contact "Uncle". In response to the input operation 962, the terminal 100 may display, in split-screen mode by using the external display device 200, the SMS message chat interface 820 and a video play interface 830 shown in FIG. 8B-1. The video play interface 830 is the same as the video play interface 930. The text descriptions of the video play interface 830 are also applicable to the video play interface 930. Optionally, in response to the input operation 943, the terminal 100 may further display, through the touchscreen 300, the SMS message chat interface 810 shown in FIG. 8B-2.

In some embodiments, the terminal 100 may receive, by using the mouse, an input operation (for example, an operation of left-clicking the notification message 928 by using the mouse) performed by the user on the notification message 928 shown in FIG. 9B-1. In response to the input operation performed on the notification message 928, the terminal 100 may display, in split-screen mode by using the external display device 200, the SMS message chat interface 820 and the video play interface 830 shown in FIG. 8B-1. The video play interface 830 and the video play interface 930 have same interface elements. In some embodiments, in response to the input operation 942, the terminal 100 may further display, through the touchscreen 300, the SMS message chat interface 816 shown in FIG. 8A-2. In this way, the user may directly control the mouse to click the notification message 928 to enter the SMS message chat interface 820, and reply to the SMS message of the contact. This simplifies an operation step of replying to the message by the user.

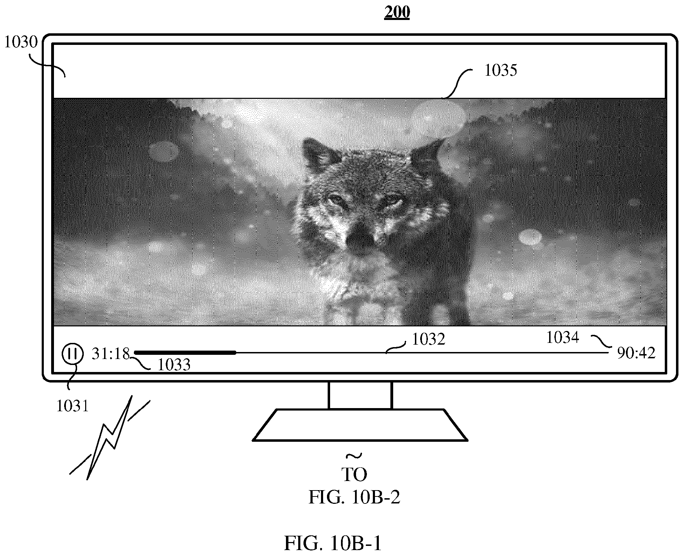

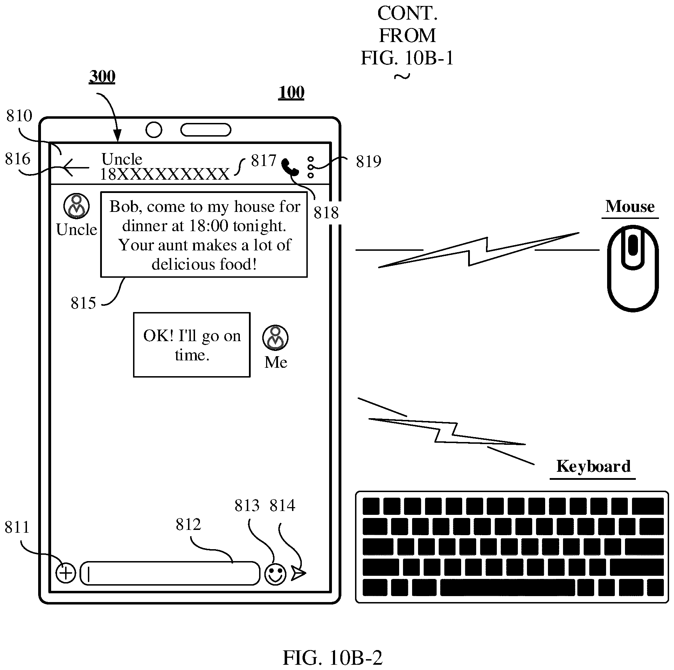

After the external display device 200 displays the SMS message chat interface 820 and the video play interface 830 in split-screen mode, the terminal 100 may further receive an input operation (for example, an operation that the mouse pointer 523 slides at a left edge of the external display device 200 and whose sliding time is greater than a second time threshold T2, for example, an operation that the user presses a key "F12" on the keyboard, or for another example, an operation that the user presses a combination of keys "Ctrl"+"Alt"+"P" on the keyboard) of the user by using the external input device (for example, the mouse or the keyboard). In response to the input operation, the terminal 100 may disable a split-screen display function. In other words, the terminal 100 displays a video play interface (for example, a video play interface 1030 shown in FIG. 10B-1) in full screen mode by using the external display device 200.

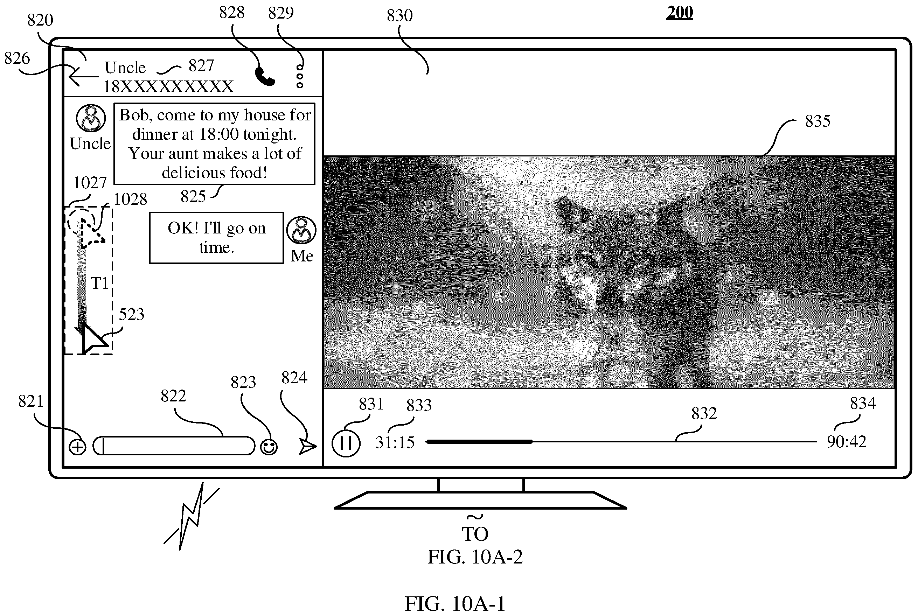

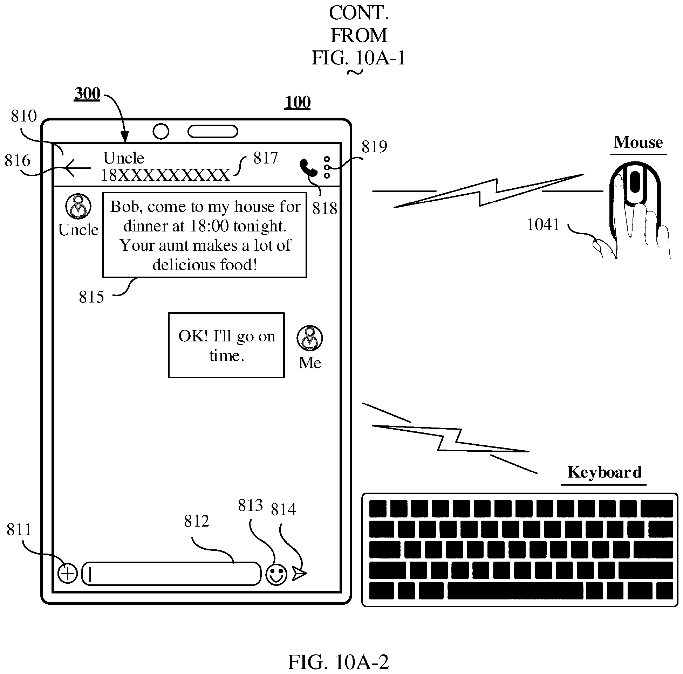

For example, as shown in FIG. 10A-1, the terminal 100 may display the SMS message chat interface 820 and the video play interface 830 in split-screen mode by using the external display device 200. For text descriptions of the SMS message chat interface 820 and the video play interface 830, refer to the foregoing embodiment shown in FIG. 8A-1. Details are not described herein again. Optionally, the terminal 100 may further display the SMS message chat interface 810 through the touchscreen 300. The SMS message chat interface 810 and the SMS message chat interface 820 have same interface elements.

The terminal 100 may receive an input operation 1041 of the user by using the mouse. The input operation 1041 may be an operation that the user operates the mouse pointer 523 of the mouse to stay in a specified area 1027 of the external display device 200 and whose staying time is greater than a first time threshold T1 (for example, 1.5 seconds). In response to the input operation 1041, the terminal 100 disables split-screen display by using the external display device 200, and displays, in full screen mode, a video play interface 1030 shown in FIG. 10B-1.

The specified area 1027 may be a display area at a left edge of the external display device 200, or the specified area 1037 may be a display area at a top edge of the external display device 200. This is not limited herein. In some embodiments, the input operation 1041 may alternatively be that a displacement at which the user operates the mouse pointer 523 of the mouse to slide in the specified area 1037 of the external display device 200 is greater than a first distance threshold L1 (for example, 10 centimeters). A start location at which the mouse pointer 523 slides may be a location 1028 shown in FIG. 10A-1.

As shown in FIG. 10B-1, the terminal 100 may display the video play interface 1030 in full screen mode by using the external display device 200. The video play interface 1030 includes a play/pause button 1031, a play progress bar 1032, a play progress time 1033, a total video time 1034, and a play image 1035. Optionally, the terminal 100 may display the SMS message chat interface 810 through the touchscreen 300. For text descriptions of the SMS message chat interface 810, refer to the foregoing embodiment shown in FIG. 8A-2. Details are not described herein again.

In some embodiments, a trigger operation of disabling a split-screen display function by the terminal 100 on the external display device 200 is not limited to the input operation 1041 shown in FIG. 10A-2, and may also be that the user uses the mouse to drag a division line between the two interfaces that are displayed in split-screen mode. When a distance at which the division line is dragged is greater than a second distance threshold L2, the terminal 100 may disable the split-screen display function on the external display device 200. In other words, the terminal 100 displays a video play interface (for example, the video play interface 1030 shown in FIG. 10B-1) in full screen mode by using the external display device 200.

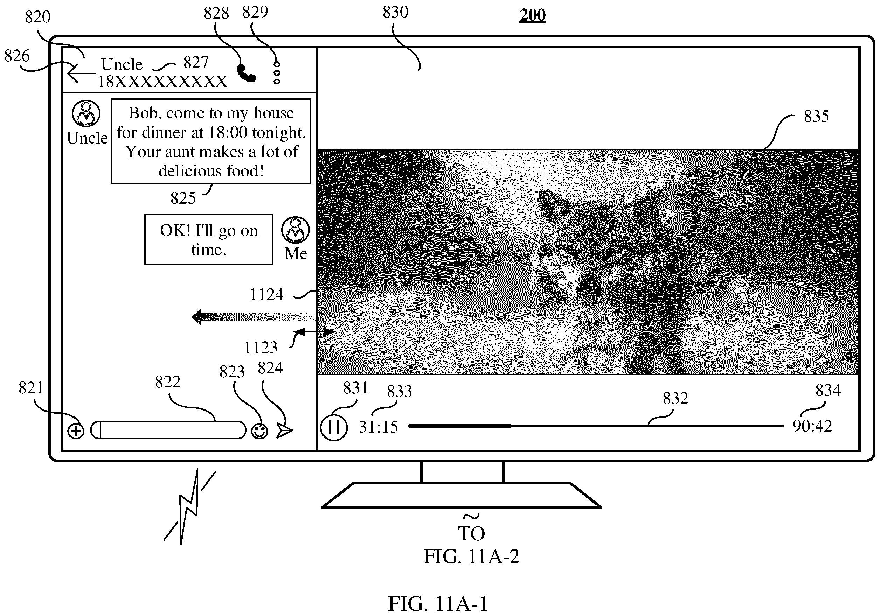

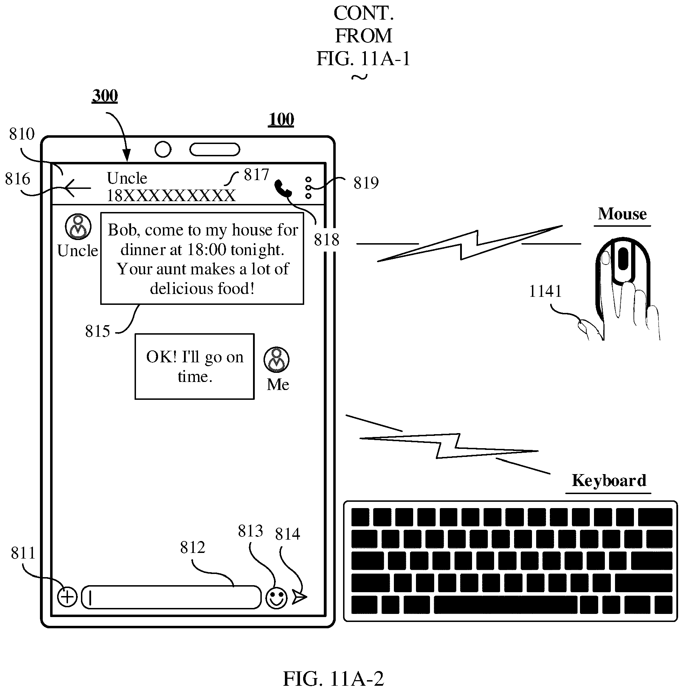

For example, as shown in FIG. 11A-1, the terminal 100 may display the SMS message chat interface 820 and the video play interface 830 in split-screen mode by using the external display device 200. For text descriptions of the SMS message chat interface 820 and the video play interface 830, refer to the foregoing embodiment shown in FIG. 8A-1. Details are not described herein again. Optionally, the terminal 100 may further display the SMS message chat interface 810 through the touchscreen 300. The SMS message chat interface 810 and the SMS message chat interface 820 have same interface elements.

The terminal 100 may receive an input operation 1141 of the user by using a mouse. The input operation 1141 may be that the user operates a mouse pointer 1123 of the mouse to move to a location of a division line 1124, and touches and holds a left button of the mouse to drag the division line 1124 to the left, so that a displacement of the division line 1124 is greater than a second distance threshold L2 (for example, 20 centimeters). A direction of dragging the division line 1124 may not be a strict left direction, for example, may be an upper left direction or a lower left direction. This is not limited herein. The division line 1124 is located at a junction of the SMS message chat interface 820 and the video play interface 830. The mouse pointer 1123 and the mouse pointer 523 in the foregoing embodiments are the same, but only when the mouse pointer 523 moves to the division line 1124, a shape of the mouse pointer 523 may change, and the mouse pointer obtained after the shape changes may be the mouse pointer 1123 in FIG. 11A-1.

In some embodiments, the input operation 1141 may alternatively be that the user operates the mouse pointer 1123 of the mouse to move to the location of the division line 1124, and touches and holds the left button of the mouse to drag the division line 1124 to the left, so that a distance from the division line 1124 to a left edge of the screen is less than a third distance threshold L3 (for example, 3 centimeters). In a process in which the division line 1124 is dragged, both a size of a display area occupied by the SMS message chat interface 820 on the external display device 200 and a size of a display area occupied by the video play interface 830 on the external display device 200 change.

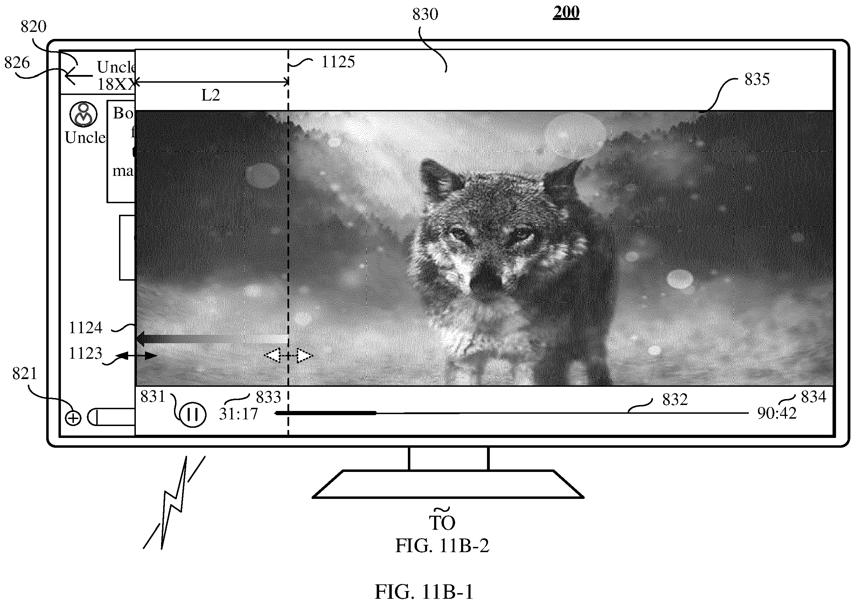

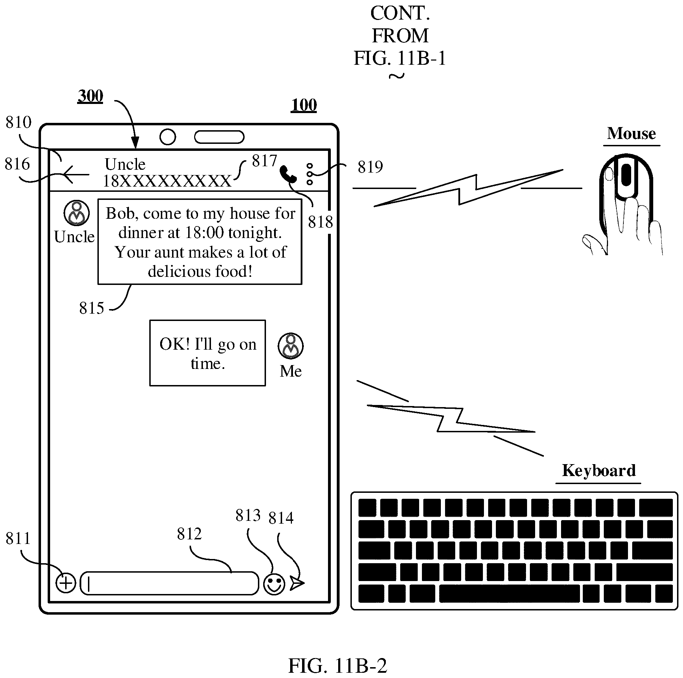

For example, as shown in FIG. 11B-1, in a process in which the division line 1124 is dragged to the left, the display area occupied by the SMS message chat interface 820 on the external display device 200 is reduced, and the display area occupied by the video play interface 830 on the external display device 200 is increased. When a displacement at which the division line 1124 is dragged from a start location 1125 is greater than a second distance threshold L2 (for example, 20 centimeters), the terminal 100 displays, in full screen mode, the video play interface 1030 shown in FIG. 10B-1.

FIG. 12 is a flowchart of a message processing method according to an embodiment of this application. As shown in FIG. 12, the method includes the following steps.

After a terminal establishes a connection to an external display device, the terminal displays a second interface.

For example, the second interface may be the home screen 510 shown in FIG. 5A and FIG. 5B or FIG. 6A and FIG. 6B. For details, refer to the foregoing embodiments shown in FIG. 5A and FIG. 5B and FIG. 6A and FIG. 6B. The details are not described herein again.

S1201: The terminal sends first data to the external display device. S1202: The external display device displays a first interface in full screen mode based on the received first data, where the first interface is different from the second interface.

The first data includes display data in the first interface, instruction data displayed in full screen mode, and the like. For example, the first interface may be the video play interface 530 shown in FIG. 7A and FIG. 7B.

S1203: The terminal receives a new message of a first application.

For example, the new message of the first application may be a new SMS message of a Messages application. As shown in FIG. 8A-2, the new SMS message of the Messages application may be the notification message 518. The new message of the first application is not limited thereto. The new message of the first application may alternatively be a new message of a WeChat application, a new message of a QQ application, or the like.

S1204: The terminal sends a first instruction to the external display device. S1205: The external display device displays a first notification message after receiving the first instruction.

The first instruction is used to instruct the external display device to display the first notification message. The first notification message may be the notification message 535 shown in FIG. 8A-1. The first notification message is not limited thereto. The first notification message may alternatively be a voice notification, a mechanical vibration notification, or the like.

S1206: The terminal receives a first input operation performed by a user on the first notification message.

For example, the first input operation may be the input operation 841 shown in FIG. 8A-2, or may be the operation 941 shown in FIG. 9A-2. For details, refer to the foregoing embodiments shown in FIG. 8A-1 and FIG. 8A-2 and FIG. 9A-1 and FIG. 9A-2. The details are not described herein again.

S1207: The terminal displays a third interface through a touchscreen. S1208: The terminal sends second data to the external display device.

The second data may include display data in a fourth interface, display data in a fifth interface, split-screen instruction data, and the like. For example, the third interface may be the SMS message chat interface 810 shown in FIG. 8B-2. For details, refer to the foregoing embodiment shown in FIG. 8B-1 and FIG. 8B-2. The details are not described herein again.

S1209: After receiving the second data, the external display device divides a display area of the external display device into a first display area and a second display area; and displays the fourth interface in the first display area, and displays the fifth interface in the second display area. The fourth interface is an interface obtained after the first interface is proportionally scaled down, and the fourth interface and the first interface have a same interface element; and an interface element in the fifth interface is the same as an interface element in the third interface.

For example, the fourth interface displayed in the first display area may be the video play interface 830 shown in FIG. 8B-1. The fifth interface displayed in the second display area may be the SMS message chat interface 820 shown in FIG. 8B-1.

In this way, when the terminal displays the first interface in full screen mode by using the external display device, if the terminal receives the new message of the first application, the terminal can display, in split-screen mode by using the external display device based on a requirement of the user, the interface obtained after the first interface is scaled down and the interface of the first application, so that the user can simultaneously operate a plurality of display interfaces on the external display device, and the user can view the new message of the first application.

In an implementation, after the external display device displays the fourth interface in the first display area, and displays the fifth interface in the second display area, the method further includes: The terminal first sends a second instruction to the external display device when the terminal receives a new message of a second application. Then, the external display device displays second notification information after receiving the second instruction. The terminal receives a second input operation performed by the user on the second notification information. The terminal sends third data to the external display device in response to the second input operation. After receiving the third data, the external display device displays the fourth interface in the first display area, and displays a sixth interface in the second display area. The sixth interface is an interface of the second application. In this way, after the external display device displays the two interfaces in split-screen mode, when the new message of the second application arrives, the terminal may display, based on a requirement of the user, the interface of the second application in a display area in which the interface of the first application is originally displayed on the external display device, so that the user can reply to new messages of a plurality of applications in a timely manner.

In an implementation, after the external display device displays the fourth interface in the first display area, and displays the fifth interface in the second display area, the method further includes: The terminal first sends a second instruction to the external display device when the terminal receives a new message of a second application. Then, the external display device displays second notification information after receiving the second instruction. The terminal receives a second input operation performed by the user on the second notification information. The terminal sends fourth data to the external display device in response to the second input operation. After receiving the fourth data, the external display device divides a display area of the external display device into a third display area, a fourth display area, and a fifth display area; and displays a seventh interface in the third display area, displays an eighth interface in the fourth display area, and displays a ninth interface in the fifth display area. The seventh interface and the fourth interface have a same interface element, the eighth interface is an interface of the first application, and the ninth interface is an interface of the second application. In this way, after the external display device displays the two interfaces in split-screen mode, when the new message of the second application arrives, the terminal can display, in split-screen mode by using the external display device based on a requirement of the user, the interface obtained after the first interface is scaled down, the interface of the first application, and the interface of the second application, so that the user can reply to new messages of a plurality of applications in a timely manner.

In an implementation, after the external display device displays the first notification message, the method further includes: When the terminal does not receive, within a first time threshold, the first input operation performed on the first notification message, the terminal sends a third instruction to the external display device. After receiving the third instruction, the external display device hides the first notification message, and displays a first prompt used to prompt the user to view the new message of the first application on the terminal. In this way, when the user does not expect to view the first notification message, the terminal hides the first notification message, to reduce blocking of the first interface displayed on the external display device. This improves user experience.

For example, the first time threshold may be 3 seconds, 5 seconds, or 10 seconds. This is not limited herein. The first prompt may be the prompt information 851 shown in FIG. 8C-1. For details, refer to the foregoing embodiment shown in FIG. 8C-1 and FIG. 8C-2. The details are not described herein again.

In an implementation, a touch sensor is disposed on the external display device. That the terminal receives the first input operation performed by the user on the notification message specifically includes: The terminal receives, by using the touch sensor of the external display device, a first touch operation performed by the user on the notification message. In this way, when the external display device is a screen with a touch sensor, the terminal can receive the touch operation performed by the user on the external display device, to enable split-screen display on the external display device, so that the user can quickly view the new message of the first application.

In an implementation, a mouse is connected to the terminal. That the terminal receives the first input operation performed by the user on the notification message specifically includes: The terminal receives, by using the mouse, a first click operation performed by the user on the first notification message. In this way, the terminal can receive, by using the mouse, the click operation performed by the user on the first notification message, to enable split-screen display on the external display device, so that the user can quickly view the new message of the first application. For example, the first click operation may be the input operation 841 in FIG. 8A-2. For details, refer to the foregoing embodiments. The details are not described herein again.

In an implementation, a mouse is connected to the terminal. That the terminal receives the first input operation performed by the user on the notification message specifically includes: The terminal receives, by using the mouse, a first slide operation that the user operates a mouse pointer displayed on the external display device to slide in a first specified area on the external display device. A sliding distance of the first slide operation in the first specified area is greater than a first distance threshold, or a sliding time of the first slide operation in the first specified area is greater than a second time threshold. In this way, the terminal can receive, by using the mouse, the slide operation that the user controls the mouse pointer to slide on the external display device, to enable split-screen display on the external display device, so that the user can quickly view the new message of the first application. For example, the first slide operation may be the input operation 941 in FIG. 9A-2. For details, refer to the foregoing embodiment shown in FIG. 9A-1 and FIG. 9A-2. The details are not described herein again.

In an implementation, a keyboard is connected to the terminal. That the terminal receives the first input operation performed by the user on the notification message specifically includes: The terminal receives, by using the keyboard, a first press operation performed by the user on one or more specified keys on the keyboard. In this way, the terminal can receive, by using the keyboard, the press operation performed by the user on the specified key, to enable split-screen display on the external display device, so that the user can quickly view the new message of the first application.

In an implementation, the method further includes: The terminal receives a third input operation of the user. The terminal sends fifth data to the external display device in response to the third input operation. The external display device displays the first interface in full screen mode after receiving the fifth data. In this way, after the user views the new message of the first application, the terminal can resume, based on a requirement of the user, displaying the first interface in full screen mode by using the external display device. This improves user experience.

In an implementation, the touch sensor is disposed on the external display device. That the terminal receives a third input operation of the user specifically includes: The terminal receives a second touch operation of the user by using the touch sensor of the external display device.

Alternatively, the mouse is connected to the terminal. That the terminal receives a third input operation of the user specifically includes: The terminal receives, by using the mouse, a second slide operation that the user operates the mouse pointer displayed on the external display device to slide in a second specified area on the external display device. A sliding distance of the second slide operation in the second specified area is greater than a second distance threshold, or a sliding time of the second slide operation in the second specified area is greater than the second time threshold.

Alternatively, the keyboard is connected to the terminal. That the terminal receives a third input operation of the user specifically includes: The terminal receives, by using the keyboard, a second press operation performed by the user on one or more specified keys on the keyboard.

In this way, when the external display device is a screen with a touch sensor, the terminal can receive the touch operation performed by the user on the external display device, to enable split-screen display on the external display device; or receive the slide operation that the user controls the mouse pointer to slide on the external display device, to enable split-screen display on the external display device; or receive, by using the keyboard, the press operation performed by the user on the specified key, to enable split-screen display on the external display device, so that the user can quickly view the new message of the first application.

For example, for the second slide operation, refer to the input operation 1041 shown in FIG. 10A-2. For details, refer to the embodiment shown in FIG. 10A-1 and FIG. 10A-2. The details are not described herein again.

In an implementation, the first interface includes a video play interface, a slideshow presentation interface, or a picture browsing interface. Alternatively, the second interface includes a home screen (for example, the home screen 510 shown in FIG. 5A and FIG. 5B), and the home screen includes an icon of the first application (for example, an icon of an SMS message application).

FIG. 13 is a schematic architectural diagram of a system according to an embodiment of this application. The system 1300 includes a terminal 100 and an external display device 200. The terminal 100 is connected to the external display device 200 in a wireless or wired manner.

The terminal is configured to send first data to the external display device. The external display device is configured to display a first interface in full screen mode based on the received first data. A second interface is displayed on a touchscreen of the terminal, and the first interface is different from the second interface. The terminal is further configured to send a first instruction to the external display device when receiving a new message of a first application. The external display device is further configured to display first notification information after receiving the first instruction. The terminal is further configured to: when the terminal receives a first input operation performed by a user on the first notification information, display a third interface through the touchscreen, and send second data to the external display device. The third interface is an interface of the first application. The external display device is further configured to: after receiving the second data, divide a display area of the external display device into a first display area and a second display area; and display a fourth interface in the first display area, and display a fifth interface in the second display area. The fourth interface is an interface obtained after the first interface is scaled down proportionally, and the fourth interface and the first interface have a same interface element; and an interface element in the fifth interface is the same as an interface element in the third interface.

In this way, when the terminal displays the first interface in full screen mode by using the external display device, if the terminal receives the new message of the first application, the terminal can display, in split-screen mode by using the external display device based on a requirement of the user, the interface obtained after the first interface is scaled down and the interface of the first application, so that the user can simultaneously operate a plurality of display interfaces on the external display device, and the user can view the new message of the first application.

In an implementation, the terminal is further configured to send a second instruction to the external display device when receiving a new message of a second application. The external display device is further configured to display a second notification message after receiving the second instruction. The terminal is further configured to receive a second input operation performed by the user on the second notification message. The terminal is further configured to send third data to the external display device in response to the second input operation. The external display device is further configured to: after receiving the third data, display the fourth interface in the first display area, and display a sixth interface in the second display area. The sixth interface is an interface of the second application. In this way, after the external display device displays the two interfaces in split-screen mode, when the new message of the second application arrives, the terminal may display, based on a requirement of the user, the interface of the second application in a display area in which the interface of the first application is originally displayed on the external display device, so that the user can reply to new messages of a plurality of applications in a timely manner.

In an implementation, the terminal is further configured to send, by the terminal, a second instruction to the external display device when receiving a new message of a second application. The external display device is further configured to display a second notification message after receiving the second instruction. The terminal is further configured to receive a second input operation performed by the user on the second notification message. The terminal is further configured to send fourth data to the external display device in response to the second input operation. The external display device is further configured to: after receiving the fourth data, divide a display area of the external display device into a third display area, a fourth display area, and a fifth display area; and display a seventh interface in the third display area, display an eighth interface in the fourth display area, and display a ninth interface in the fifth display area. The seventh interface and the fourth interface have a same interface element, the eighth interface is an interface of the first application, and the ninth interface is an interface of the second application. In this way, after the external display device displays the two interfaces in split-screen mode, when the new message of the second application arrives, the terminal can display, in split-screen mode by using the external display device based on a requirement of the user, the interface obtained after the first interface is scaled down, the interface of the first application, and the interface of the second application, so that the user can reply to new messages of a plurality of applications in a timely manner.

In an implementation, the terminal is further configured to: when the terminal does not receive, within a first time threshold, the first input operation performed on the first notification message, send, by the terminal, a third instruction to the external display device. The external display device is further configured to: after receiving the third instruction, hide the first notification message, and display a first prompt used to prompt the user to view the new message of the first application on the terminal. In this way, when the user does not expect to view the first notification message, the terminal hides the first notification message, to reduce blocking of the first interface displayed on the external display device. This improves user experience.

In an implementation, a touch sensor is disposed on the external display device. That the terminal is further configured to receive the first input operation performed by the user on the notification message specifically includes: The terminal is further configured to receive, by using the touch sensor of the external display device, a first touch operation performed by the user on the notification message. In this way, when the external display device is a screen with the touch sensor, the terminal can receive the touch operation performed by the user on the external display device, to enable split-screen display on the external display device, so that the user can quickly view the new message of the first application.

In an implementation, the system further includes a keyboard, and the keyboard is connected to the terminal. That the terminal is further configured to receive the first input operation performed by the user on the notification message specifically includes: The terminal is further configured to receive, by using the mouse, a first click operation performed by the user on the first notification message. In this way, the terminal can receive, by using the mouse, the click operation performed by the user on the first notification message, to enable split-screen display on the external display device, so that the user can quickly view the new message of the first application.

In an implementation, the system further includes a mouse, and the mouse is connected to the terminal. That the terminal is further configured to receive the first input operation performed by the user on the notification message specifically includes: The terminal is further configured to receive, by using the mouse, a first slide operation that the user operates a mouse pointer displayed on the external display device to slide in a first specified area on the external display device. A sliding distance of the first slide operation in the first specified area is greater than a first distance threshold, or a sliding time of the first slide operation in the first specified area is greater than a second time threshold. In this way, the terminal can receive, by using the mouse, the slide operation that the user controls the mouse pointer to slide on the external display device, to enable split-screen display on the external display device, so that the user can quickly view the new message of the first application.

In an implementation, the system further includes a keyboard, and the keyboard is connected to the terminal. That the terminal is further configured to receive the first input operation performed by the user on the notification message specifically includes: The terminal is further configured to receive, by using the keyboard, a first press operation performed by the user on one or more specified keys on the keyboard. In this way, the terminal can receive, by using the keyboard, the press operation performed by the user on the specified key, to enable split-screen display on the external display device, so that the user can quickly view the new message of the first application.

In an implementation, the terminal is further configured to receive a third input operation of the user. The terminal is further configured to send fifth data to the external display device in response to the third input operation. The external display device is further configured to display the first interface in full screen mode after receiving the fifth data. In this way, after the user views the new message of the first application, the terminal can resume, based on a requirement of the user, displaying the first interface in full screen mode by using the external display device. This improves user experience.

In an implementation, the touch sensor is disposed on the external display device. That the terminal is further configured to receive a third input operation of the user specifically includes: The terminal receives a second touch operation of the user by using the touch sensor of the external display device.

Alternatively, the system includes the mouse connected to the terminal. That the terminal is further configured to receive a third input operation of the user specifically includes: The terminal receives, by using the mouse, a second slide operation that the user operates the mouse pointer displayed on the external display device to slide in a second specified area on the external display device. A sliding distance of the second slide operation in the second specified area is greater than a second distance threshold, or a sliding time of the second slide operation in the second specified area is greater than the second time threshold.

Alternatively, the system includes the keyboard connected to the terminal. That the terminal is further configured to receive a third input operation of the user specifically includes: The terminal receives, by using the keyboard, a second press operation performed by the user on one or more specified keys on the keyboard.

In this way, when the external display device is a screen with the touch sensor, the terminal can receive the touch operation performed by the user on the external display device, to enable split-screen display on the external display device; or receive the slide operation that the user controls the mouse pointer to slide on the external display device, to enable split-screen display on the external display device; or receive, by using the keyboard, the press operation performed by the user on the specified key, to enable split-screen display on the external display device, so that the user can quickly view the new message of the first application.

In an implementation, the first interface includes a video play interface, a slideshow presentation interface, or a picture browsing interface. Alternatively, the second interface includes a home screen, and the home screen includes an icon of the first application.

For a part that is not described in detail in the embodiment shown in FIG. 13, refer to the foregoing embodiments. Details are not described herein again.

In conclusion, the foregoing embodiments are merely intended for describing the technical solutions of this application, but not for limiting this application. Although this application is described in detail with reference to the foregoing embodiments, a person of ordinary skill in the art should understand that the technical solutions recoded in the foregoing embodiments may still be modified, or some technical features in the technical solutions may be equivalently replaced. These modifications or replacements do not make the essence of the corresponding technical solutions fall outside the scope of the technical solutions of the embodiments of this application.

## Claims

1. A message processing method, comprising:
sending, by a terminal, first data to an external display device after the terminal establishes a connection to the external display device;
displaying, by the external display device, a first interface in full screen mode based on the received first data, wherein a second interface is displayed on a touchscreen of the terminal, and the first interface is different from the second interface;
sending, by the terminal, a first instruction to the external display device when the terminal receives a new message of a first application;
displaying, by the external display device, first notification information after receiving the first instruction;
when the terminal receives a first input operation performed by a user on the first notification information, displaying, by the terminal, a third interface through the touchscreen, and sending second data to the external display device, wherein the third interface is an interface of the first application; and
after receiving the second data, dividing, by the external display device, a display area of the external display device into a first display area and a second display area; and displaying a fourth interface in the first display area, and displaying a fifth interface in the second display area, wherein the fourth interface is an interface obtained after the first interface is scaled down proportionally, and the fourth interface and the first interface have a same interface element; and an interface element in the fifth interface is the same as an interface element in the third interface.

2. The method according to claim 1, wherein after the displaying, by the external display device, a fourth interface in a first display area, and displaying a fifth interface in a second display area, the method further comprises:
sending, by the terminal, a second instruction to the external display device when the terminal receives a new message of a second application;
displaying, by the external display device, second notification information after receiving the second instruction;
receiving, by the terminal, a second input operation performed by the user on the second notification information;
sending, by the terminal, third data to the external display device in response to the second input operation; and
after receiving the third data, displaying, by the external display device, the fourth interface in the first display area, and displaying a sixth interface in the second display area, wherein the sixth interface is an interface of the second application.

3. The method according to claim 1, wherein after the displaying, by the external display device, a fourth interface in a first display area, and displaying a fifth interface in a second display area, the method further comprises:
sending, by the terminal, a second instruction to the external display device when the terminal receives a new message of a second application;
displaying, by the external display device, second notification information after receiving the second instruction;
receiving, by the terminal, a second input operation performed by the user on the second notification information;
sending, by the terminal, fourth data to the external display device in response to the second input operation; and
after receiving the fourth data, dividing, by the external display device, a display area of the external display device into a third display area, a fourth display area, and a fifth display area; and displaying a seventh interface in the third display area, displaying an eighth interface in the fourth display area, and displaying a ninth interface in the fifth display area, wherein the seventh interface and the fourth interface have a same interface element, the eighth interface is an interface of the first application, and the ninth interface is an interface of the second application.

4. The method according to claim 1, wherein after the displaying, by the external display device, a first notification message, the method further comprises:
when the terminal does not receive, within a first time threshold, the first input operation performed on the first notification message, sending, by the terminal, a third instruction to the external display device; and
after receiving the third instruction, hiding, by the external display device, the first notification message, and displaying a first prompt used to prompt the user to view the new message of the first application on the terminal.

5. The method according to claim 1, wherein a touch sensor is disposed on the external display device; and that the terminal receives the first input operation performed by the user on the notification message specifically comprises:
receiving, by the terminal by using the touch sensor of the external display device, a first touch operation performed by the user on the notification message.

6. The method according to claim 1, wherein a mouse is connected to the terminal; and that the terminal receives the first input operation performed by the user on the notification message specifically comprises:
receiving, by the terminal by using the mouse, a first click operation performed by the user on the first notification message.

7. The method according to claim 1, wherein a mouse is connected to the terminal; and that the terminal receives the first input operation performed by the user on the notification message specifically comprises:
receiving, by the terminal by using the mouse, a first slide operation that the user operates a mouse pointer displayed on the external display device to slide in a first specified area on the external display device, wherein a sliding distance of the first slide operation in the first specified area is greater than a first distance threshold, or a sliding time of the first slide operation in the first specified area is greater than a second time threshold.

8. The method according to claim 1, wherein a keyboard is connected to the terminal; and that the terminal receives the first input operation performed by the user on the notification message specifically comprises:
receiving, by the terminal by using the keyboard, a first press operation performed by the user on one or more specified keys on the keyboard.

9. The method according to any one of claims 1 to 8, wherein the method further comprises:
receiving, by the terminal, a third input operation of the user;
sending, by the terminal, fifth data to the external display device in response to the third input operation; and
displaying, by the external display device, the first interface in full screen mode after receiving the fifth data.

10. The method according to claim 9, wherein the touch sensor is disposed on the external display device; and the receiving, by the terminal, a third input operation of the user specifically comprises:
receiving, by the terminal, a second touch operation of the user by using the touch sensor of the external display device; or
the mouse is connected to the terminal; and the receiving, by the terminal, a third input operation of the user specifically comprises:
receiving, by the terminal by using the mouse, a second slide operation that the user operates the mouse pointer displayed on the external display device to slide in a second specified area on the external display device, wherein a sliding distance of the second slide operation in the second specified area is greater than a second distance threshold, or a sliding time of the second slide operation in the second specified area is greater than the second time threshold; or
the keyboard is connected to the terminal; and the receiving, by the terminal, a third input operation of the user specifically comprises:
receiving, by the terminal by using the keyboard, a second press operation performed by the user on one or more specified keys on the keyboard.

11. The method according to any one of claims 1 to 9, wherein the first interface comprises a video play interface, a slideshow presentation interface, or a picture browsing interface; or
the second interface comprises a home screen, and the home screen comprises an icon of the first application.

12. A system, comprising a terminal and an external display device, wherein the terminal is connected to the external display device, wherein
the terminal is configured to send first data to the external display device;
the external display device is configured to display a first interface in full screen mode based on the received first data, wherein a second interface is displayed on a touchscreen of the terminal, and the first interface is different from the second interface;
the terminal is further configured to send a first instruction to the external display device when receiving a new message of a first application;
the external display device is further configured to display first notification information after receiving the first instruction;
the terminal is further configured to: when the terminal receives a first input operation performed by a user on the first notification information, display a third interface through the touchscreen, and send second data to the external display device, wherein the third interface is an interface of the first application; and
the external display device is further configured to: after receiving the second data, divide a display area of the external display device into a first display area and a second display area; and display a fourth interface in the first display area, and display a fifth interface in the second display area, wherein the fourth interface is an interface obtained after the first interface is scaled down proportionally, and the fourth interface and the first interface have a same interface element; and an interface element in the fifth interface is the same as an interface element in the third interface.

13. The system according to claim 12, wherein the terminal is further configured to send a second instruction to the external display device when receiving a new message of a second application;
the external display device is further configured to display a second notification message after receiving the second instruction;
the terminal is further configured to receive a second input operation performed by the user on the second notification message;
the terminal is further configured to send third data to the external display device in response to the second input operation; and
the external display device is further configured to: after receiving the third data, display the fourth interface in the first display area, and display a sixth interface in the second display area, wherein the sixth interface is an interface of the second application.

14. The system according to claim 12, wherein the terminal is further configured to send, by the terminal, a second instruction to the external display device when receiving a new message of a second application;
the external display device is further configured to display a second notification message after receiving the second instruction;
the terminal is further configured to receive a second input operation performed by the user on the second notification message;
the terminal is further configured to send fourth data to the external display device in response to the second input operation; and
the external display device is further configured to: after receiving the fourth data, divide a display area of the external display device into a third display area, a fourth display area, and a fifth display area; and display a seventh interface in the third display area, display an eighth interface in the fourth display area, and display a ninth interface in the fifth display area, wherein the seventh interface and the fourth interface have a same interface element, the eighth interface is an interface of the first application, and the ninth interface is an interface of the second application.

15. The system according to claim 12, wherein the terminal is further configured to: when the terminal does not receive, within a first time threshold, the first input operation performed on the first notification message, send, by the terminal, a third instruction to the external display device; and
the external display device is further configured to: after receiving the third instruction, hide the first notification message, and display a first prompt used to prompt the user to view the new message of the first application on the terminal.

16. The system according to claim 12, wherein a touch sensor is disposed on the external display device; and that the terminal is further configured to receive the first input operation performed by the user on the notification message specifically comprises:
the terminal is further configured to receive, by using the touch sensor of the external display device, a first touch operation performed by the user on the notification message.

17. The system according to claim 12, wherein the system further comprises a mouse, and the mouse is connected to the terminal; and that the terminal is further configured to receive the first input operation performed by the user on the notification message specifically comprises:
the terminal is further configured to receive, by using the mouse, a first slide operation that the user operates a mouse pointer displayed on the external display device to slide in a first specified area on the external display device, wherein a sliding distance of the first slide operation in the first specified area is greater than a first distance threshold, or a sliding time of the first slide operation in the first specified area is greater than a second time threshold.

18. The system according to claim 12, wherein the system further comprises a keyboard, and the keyboard is connected to the terminal; and that the terminal is further configured to receive the first input operation performed by the user on the notification message specifically comprises:
the terminal is further configured to receive, by using the mouse, a first click operation performed by the user on the first notification message.

19. The system according to claim 12, wherein the system further comprises a keyboard, and the keyboard is connected to the terminal; and that the terminal is further configured to receive the first input operation performed by the user on the notification message specifically comprises:
the terminal is further configured to receive, by using the keyboard, a first press operation performed by the user on one or more specified keys on the keyboard.

20. The system according to any one of claims 12 to 19, wherein the terminal is further configured to receive a third input operation of the user;
the terminal is further configured to send fifth data to the external display device in response to the third input operation; and
the external display device is further configured to display the first interface in full screen mode after receiving the fifth data.

21. The system according to claim 20, wherein the touch sensor is disposed on the external display device; and that the terminal is further configured to receive a third input operation of the user specifically comprises:
the terminal receives a second touch operation of the user by using the touch sensor of the external display device; or
the system comprises the mouse connected to the terminal; and that the terminal is further configured to receive a third input operation of the user specifically comprises:
the terminal receives, by using the mouse, a second slide operation that the user operates the mouse pointer displayed on the external display device to slide in a second specified area on the external display device, wherein a sliding distance of the second slide operation in the second specified area is greater than a second distance threshold, or a sliding time of the second slide operation in the second specified area is greater than the second time threshold; or
the system comprises the keyboard connected to the terminal; and that the terminal is further configured to receive a third input operation of the user specifically comprises:
the terminal receives, by using the keyboard, a second press operation performed by the user on one or more specified keys on the keyboard.

22. The system according to any one of claims 12 to 21, wherein the first interface comprises a video play interface, a slideshow presentation interface, or a picture browsing interface; or
the second interface comprises a home screen, and the home screen comprises an icon of the first application.
